# EUROPEAN PATENT APPLICATION

(11) **EP 2 502 971 A1**
(43) Date of publication of application: **26.09.2012**
(21) Application number: 12161127.1
(22) Date of filing: 23.03.2012
(51) Int. Cl.: C09K 8/68, C09K 8/90, C09K 8/08

(54) **Modification of Solid Polysaccharide with Transesterification Agent**

(30) Priority: 24.03.2011 US 201113070671
(71) Applicant: Halliburton Energy Service, Inc., Houston, TX 77072 (US)
(72) Inventor: Reddy, B. Raghava, Duncan, Oklahoma 73533 (US)
(74) Representative: Cottrill, Emily Elizabeth Helen

(57) **Abstract**

Polysaccharides are reacted with transesterification agents forming modified products that: (1) have increased viscosifying efficiency, i.e., higher viscosities at reduced concentrations compared to the unmodified polysaccharide; or (2) are insolubilized at temperature ranges for which the unmodified polysaccharide would hydrate fully; or (3) both properties. In some cases, the insolubilized polysaccharides can be activated to dissolve and viscosify at specific temperature ranges by using pH modifiers. A method of treating a well is provided, including the steps of: (a) forming a treatment fluid comprising water and a modified polysaccharide, wherein the modified polysaccharide is characterized by having been made by the process of combining: (i) a water-soluble polysaccharide, wherein the polysaccharide is in a solid form during the combining step; and (ii) a transesterification agent, wherein the transesterification agent is in liquid form; wherein the step of combining is in the presence of less than 10% by weight water relative to the water-soluble polysaccharide and wherein any water present is at a pH of 8 or less; and (b) introducing the treatment fluid into the well.

## Description

### BACKGROUND

### Technical Field

The inventions generally relate to producing crude oil or natural gas from a well drilled into a subterranean formation. More particularly, the invention is directed to improved treatment fluids and methods for oil and gas wells.

### Background Art

Oil and gas hydrocarbons are naturally occurring in some subterranean formations. A subterranean formation containing oil or gas is sometimes referred to as a reservoir. A reservoir may be located under land or off shore. Oil and gas reservoirs are typically located in the range of a few hundred feet (shallow reservoirs) to a few tens of thousands of feet (ultra-deep reservoirs). In order to produce oil or gas, a well is drilled into a subterranean formation.

As used herein, "subterranean formation" refers to the fundamental unit of lithostratigraphy. A subterranean formation is a body of rock that is sufficiently distinctive and continuous that it can be mapped. In the context of formation evaluation, the term refers to the volume of rock seen by a measurement made through the wellbore, as in a log or a well test. These measurements indicate the physical properties of this volume, such as the property of permeability. A "zone" refers to an interval or unit of rock along a wellbore that is differentiated from surrounding rocks based on hydrocarbon content or other features, such as faults or fractures.

In order to produce oil or gas, a well is drilled into a subterranean formation, which may be a reservoir or adjacent to a reservoir. As used herein, a "well" includes at least one wellbore drilled into a subterranean formation, which may be a reservoir or adjacent to a reservoir. A wellbore can have vertical and horizontal portions, and it can be straight, curved, or branched. As used herein, a "well" also includes the near-wellbore region. As used herein, "into a well" means and includes into any portion of the well, including into the wellbore or into the near-wellbore region via the wellbore.

Various types of treatments are commonly performed on a well or subterranean formation. For example, stimulation is a type of treatment performed on a well or subterranean formation to restore or enhance the productivity of oil and gas from the well or subterranean formation. Stimulation treatments fall into two main groups: hydraulic fracturing and matrix treatments. Fracturing treatments are performed above the fracture pressure of the subterranean formation to create or extend a highly permeable flow path between the formation and the wellbore. Other types of treatments include, for example, controlling excessive water production.

As used herein, the word "treatment" refers to a treatment for a well or subterranean formation penetrated by a wellbore that is adapted to achieve a specific purpose, such as stimulation, isolation, or conformance control, however, the word "treatment" does not necessarily imply any particular purpose.

A treatment typically involves introducing a treatment fluid into a well. As used herein, a "treatment fluid" is a fluid used to resolve a specific condition of a wellbore or subterranean formation. As used herein, a "treatment fluid" also means the specific composition of a fluid at the time the fluid is being introduced into a wellbore. A treatment fluid is typically adapted to be used to achieve a specific purpose, such as stimulation, isolation, or control of reservoir gas or water. The word "treatment" in the term "treatment fluid" does not necessarily imply any particular action by the fluid. As used herein, a treatment fluid can be, for example, a drilling fluid, a spacer fluid, a gravel packing fluid, or a completion fluid.

### Fluid or Gel State

As used herein, a "fluid" refers to an amorphous substance that tends to flow and to conform to the outline of its container when tested at a temperature of 77 °F (25 °C) and a pressure of 1 atmosphere (101.3 kPa). Examples of fluids are liquids and gases. As used herein, a "liquid" refers to an amorphous substance that has little or no tendency to disperse and relatively high incompressibility when tested at a temperature of 77 °F (25 °C) and a pressure of 1 atmosphere (101.3 kPa). As discussed below, a treatment fluid can be a viscous fluid.

The term "gel," as used herein, refers to a substance that is in a semi-solid, jelly-like state that can have properties ranging from soft and weak to hard and tough. As used herein, a "gel" refers to a substance that has or assumes this state when tested at a temperature of 77 °F (25 °C) and a pressure of 1 atmosphere (101.3 kPa). In some applications, a treatment fluid forms or becomes a gel downhole.

### Fluid or Gel Substance as a Dispersion

The substance of a fluid can be a dispersion. A dispersion is a system in which particles are dispersed in an external phase of a different composition (or state). A dispersion can be classified a number of different ways, including based on how large the dispersed-phase particles are, whether or not precipitation occurs, and the presence of Brownian motion. For example, a dispersion can be considered to be homogeneous or heterogeneous based on the size of the dispersed-phase particles (which can also refer to droplet size in the case of a dispersed liquid phase).

A dispersion is considered to be homogeneous if the dispersed phase particles are less than about 1 nanometer in size or if the dispersed phase particles are dissolved. A homogeneous system has essentially uniform properties throughout. Examples of a homogeneous fluid include water, oil, or a solution of one or more dissolved chemicals. An aqueous solution, for example, salt water, is a homogenous solution in which water is the solvent.

A dispersion is considered to be heterogeneous if the dispersed-phase particles are greater than about 1 nanometer in size. High shear mixing can be used to create a heterogeneous dispersion.

The substance of a gel is a dispersion. A gel can be formed as a substantially dilute crosslinked system, which exhibits no flow when in the steady state. By weight, gels are mostly liquid, yet they behave like solids due to a three-dimensional crosslinked network within the liquid. The crosslinks within the fluid give a gel its structure (hardness) and contribute to stickiness (tack). In this way, gels are a dispersion of molecules or particles within a liquid in which the solid is the continuous (external) phase and the liquid is the discontinuous (internal) phase.

In addition, a dispersion can be a foam, which is a liquid that includes a dispersion of undissolved gas bubbles that foams the fluid through, usually with the aid of a chemical (a foaming agent) to achieve stability.

### Examples of Heterogeneous Dispersions: Colloids, Suspensions, and Emulsions

Dispersions can be further classified based on particle size and other characteristics.

A heterogeneous dispersion is a "colloid" where the dispersed-phase particles are in the range of about 1 nanometer to about 1 micrometer in size. Typically, the dispersed-phase particles of a colloid have a diameter of between about 5 nanometers to about 200 nanometers. Such particles are normally invisible to an optical microscope, though their presence can be confirmed with the use of an ultramicroscope or an electron microscope.

A heterogeneous dispersion is a "suspension" where the dispersed-phase particles are larger than about 1 micrometer. Such particles can be seen with a microscope, or if sufficiently large, with the naked eye.

The external phase can be a liquid, such as a colloid or a liquid suspension. A colloidal fluid has dispersed-phase particles that are so small that they do not settle. Unlike colloids, a liquid suspension of solid particles in a liquid external phase will eventually settle (in cases where the solid particles have a higher density than the liquid phase). The internal phase (solid) is dispersed throughout an external phase (fluid) through mechanical agitation, usually with the aid of a suspending agent. An example of a suspension would be sand in water. In case the dispersed-phase particles are liquid in an external medium that is another liquid, this kind of suspension is more particularly referred to as an emulsion.

Suspensions are essentially unstable from a thermodynamic point of view; however, they can be kinetically stable over a large period of time, which determines their shelf life at room temperature. This stability can also be measured under various other conditions.

More particularly, an emulsion is a dispersion of immiscible liquid as droplets into an external liquid phase. A chemical (an emulsifier or emulsifying agent) reduces the interfacial tension between the two immiscible liquids to achieve stability. An emulsion can be an oil-in-water (o/w) type or water-in-oil (w/o) type. A water-in-oil emulsion is sometimes referred to as an invert emulsion.

Multiple emulsions are possible, which are sometimes referred to as nested emulsions. Multiple emulsions are complex polydispersed systems where both oil-in-water and water-in-oil emulsions exist simultaneously in the fluid, where the oil-in-water emulsion is stabilized by a lipophillic surfactant and the water-in-oil emulsion is stabilized by a hydrophilic surfactant. These include water-in-oil-in-water (w/o/w) and oil-in-water-in-oil (o/w/o) type multiple emulsions. Even more complex polydispersed systems are possible. Multiple emulsions can be formed, for example, by dispersing a water-in-oil emulsion in water or an aqueous solution, or by dispersing an oil-in-water emulsion in oil.

In the context of a dispersion (a colloid, suspension, or emulsion), the "water" phase refers to water or an aqueous solution and the "oil" phase refers to any non-polar organic liquid, such as petroleum, kerosene, or synthetic oil.

The continuous phase of a fluid as a whole is the most external phase of the fluid, regardless of the number of phases. As used herein, a "water-based fluid" means that water or an aqueous solution is the continuous phase of the fluid as a whole. In contrast, in referring to a fluid, an "oil-based fluid" means that oil is the continuous phase of the fluid as a whole.

### Context of Hydraulic Fracturing

"Hydraulic fracturing," sometimes simply referred to as "fracturing," is a common stimulation treatment. A treatment fluid adapted for this purpose is sometimes referred to as a "fracturing fluid." The fracturing fluid is pumped at a sufficiently high flow rate and pressure into the wellbore and into the subterranean formation to create or enhance a fracture in the subterranean formation. Creating a fracture means making a new fracture in the formation. Enhancing a fracture means enlarging a pre-existing fracture in the formation.

A newly-created or extended fracture will tend to close together after the pumping of the fracturing fluid is stopped. To prevent the fracture from closing, a material must be placed in the fracture to keep the fracture propped open. A material used for this purpose is referred to as a "proppant."

The proppant is in the form of a solid particulate, which can be suspended in the fracturing fluid, carried downhole, and deposited in the fracture as a "proppant pack." The proppant pack props the fracture in an open condition while allowing fluid flow through the permeability of the pack. A particulate for use as a proppant is selected based on the characteristics of size range, crush strength, and insolubility.

The proppant pack in the fracture provides a higher-permeability flow path for the oil or gas to reach the wellbore compared to the permeability of the surrounding subterranean formation. This flow path increases oil and gas production from the subterranean formation.

The concentration of proppant in the treatment fluid is preferably in the range of from about 0.03 kilograms to about 3 kilograms of proppant per liter of liquid phase (from about 0.25 lb/gal to about 25 lb/gal).

The proppant typically has a much different density than water. For example, water has a specific gravity of 1.0 and sand has a specific gravity of about 2.7. A different-density proppant contained in water will tend to separate from the water very rapidly. Increasing the viscosity of the water using a viscosity-increasing agent can help prevent the proppant from quickly separating out of the fluid. A viscosity-increasing agent is sometimes known in the art as a "thickener" or a "suspending agent."

For reference, the viscosity of water is about 1 cP. As used herein, a fluid is considered to be pumpable if it has a viscosity of less than 5,000 cP.

Because of the high volume of fracturing fluid typically used in a fracturing operation, it is desirable to efficiently increase the viscosity of fracturing fluids to the desired viscosity using as little viscosity-increasing agent as possible. Being able to use only a small concentration of the viscosity-increasing agent requires a lesser amount of the viscosity-increasing agent in order to achieve the desired fluid viscosity in a large volume of fracturing fluid. Efficient and inexpensive viscosity-increasing agents include water-soluble polymers. Typical water-soluble polymers used in well treatments are water-soluble polysaccharides. The most common water-soluble polysaccharide employed in well treatments is guar and its derivatives.

The viscosity of a fluid at a given concentration of viscosity-increasing agent can be greatly increased by cross-linking the viscosity-increasing agent. A cross-linking agent, sometimes referred to as a crosslinker, can be used for this purpose. One example of a cross-linking agent is the borate ion. Gel formation is based on a number of factors including the particular polymer and concentration thereof, the particular cross-linker and concentration thereof, the degree of cross-linking, temperature, and a variety of other factors known to those of ordinary skill in the art. A "base gel" is a fluid that includes a viscosity-increasing agent, such as guar, but that excludes cross-linking agents. Typically, a base gel is a fluid that is mixed with another fluid containing a crosslinker, wherein the mixed fluid is adapted to form a gel at a desired time in a well treatment.

Optionally, one or more other additives can be included to form a treatment fluid. For example, treatment fluids used in the invention also commonly include a "breaker." A breaker is a chemical used for "breaking" the polymeric viscosifying agent, thus diminishing the viscosity of a fluid so that the fluid can be recovered more easily from the formation. Breakers reduce the molecular weight of the viscosity-increasing agent (which may be cross-linked) by the action of an acid, an oxidizer, an enzyme, or a combination of these. The acids, oxidizers, or enzymes can be in the form of delayed-release or encapsulated breakers.

In the case of a cross-linked viscosity-increasing agent, one way to diminish the viscosity is by breaking the cross-links. For example, the borate cross-links in a borate-cross-linked gel can be broken by lowering the pH of the fluid. At a pH above 8, the borate ion exists and is available to cross-link and cause gelling. At a lower pH, the borate ion reacts with proton and is not available for cross-linking, thus, an increase in viscosity due to borate cross-linking is reversible.

There are other uses for a water-soluble polysaccharide in a well treatment fluid. For example, during the drilling, completion, and stimulation of a well, it is common to pump an aqueous treatment fluid through tubular goods (e.g., pipes, coiled tubing, etc.) and into a subterranean formation adjacent a wellbore. A considerable amount of energy may be lost due to friction of the aqueous treatment fluid in turbulent flow through the tubular goods of the wellbore. Because of these energy losses, additional pumping horsepower may be necessary to achieve the desired well treatment. To reduce these energy losses, a water-soluble polysaccharide may be included in aqueous treatment fluids. The use of an appropriate water-soluble polysaccharide as a friction reducer in a treatment fluid is expected to reduce the energy losses due to friction.

For example, in a "high-rate water fracturing treatment," proppant suspension in the treatment fluid is largely achieved by the high rate of pumping and the high flow rate of the treatment fluid. To reduce energy losses due to friction, a water-soluble polysaccharide as a friction reducer may be included in the fracturing fluid. While a fluid used in high-rate water fracturing may contain a water-soluble polysaccharide as a friction-reducing polymer, the polysaccharide is usually included in the fracturing fluid in an amount that is sufficient to provide the desired friction reduction without forming a gel and usually without a crosslinker. As a result, the fracturing fluids used in these high-rate water-fracturing operations generally have a lower viscosity than conventional fracturing fluids.

Treatment fluids used in the invention can further contain other additives that are known to be commonly used in oil field applications by those skilled in the art. These include, but are not necessarily limited to inorganic water-soluble salts, breaker aids, surfactants, oxygen scavengers, alcohols, scale inhibitors, corrosion inhibitors, fluid-loss additives, oxidizers, and bactericides.

### Liquid Gel Concentrates

In the context of such uses for a water-soluble polysaccharide in a well treatment fluid and an associated well treatment method, the water-soluble polysaccharide has conventionally been provided as an oil-external dispersion, referred to as Liquid Gel Concentrate ("LGC"). The fluid currently used as a carrier fluid is a hydrocarbon, for example, diesel or a more environmentally benign solvent such as alpha-olefins or saturated paraffin. The purpose of these is to suspend the water-soluble polysaccharide, such as guar. Upon mixing such dispersion with at least water to form an aqueous treatment fluid, the dispersion should invert, thereby releasing the polysaccharide into the aqueous phase. Many problems associated with suspending a polysaccharide in an aqueous liquid have been overcome by adding it to water or an aqueous solution as an LGC instead of as a solid powder. LGCs are described, for example, in Harms et al., U.S. Patent No. 4,772,646, which is incorporated herein by reference.

### SUMMARY OF THE INVENTION

Solid polysaccharides are modified by reacting with a transesterification agent, such as an organic carbonate, to obtain modified polysaccharides for use in treatment fluids and methods in the oil and gas field.

It is now found that polysaccharides or polysaccharide derivatives, for example xanthan, diutan, scleroglucan, gums, celluloses, and starches, and derivatives of the foregoing, can be reacted with organic carbonates forming products that:
(1) have increased viscosifying efficiency, i.e., higher viscosities at reduced concentrations compared to the unmodified polysaccharide; or
(2) are insolubilized at temperature ranges for which the unmodified polysaccharide would hydrate fully; or
(3) both properties.

In some cases, the insolubilized polysaccharides can be activated to dissolve and viscosify at specific temperature ranges by using suitable pH modifiers. Some modified materials viscosify at elevated temperatures without the need for pH modifiers.

It is contemplated that the modified polysaccharides can be cross-linked with metal cross-linkers or borate cross-linkers.

According to an aspect of the invention there is provided a method of treating a well, wherein the method comprises the steps of:
(a) obtaining a modified polysaccharide characterized by having been made by the process of chemically combining:
   (i) a water-soluble polysaccharide, wherein the polysaccharide is in a solid form during the combining step; and
   (ii) a transesterification agent, wherein the transesterification agent is in liquid form during the combining step;
      wherein the step of chemically combining is under substantially dry conditions;
(b) forming a treatment fluid comprising the modified polysaccharide and water; and
(c) introducing the treatment fluid into the well.

According to another aspect of the invention there is provided a method of treating a well, wherein the method comprises the steps of:
(a) forming a treatment fluid comprising water and a modified polysaccharide, wherein the modified polysaccharide is characterized by having been made by the process of chemically combining:
   (i) a water-soluble polysaccharide, wherein the polysaccharide is in a solid form during the combining step; and
   (ii) a transesterification agent, wherein the transesterification agent is in liquid form during the combining step;
      wherein the step of chemically combining is under substantially dry conditions; and
(b) introducing the treatment fluid into the well.

The water-soluble polysaccharide may be selected from the group consisting of xanthan, diutan, scleroglucan, and any combination thereof.

The water-soluble polysaccharide may be selected from the group consisting of guar, a guar derivative, cellulose, a cellulose derivative, starch, a starch derivative, and any combination thereof.

The transesterification agent may be selected from the group consisting of cyclic carbamates, organic esters, carboxylic acid anhydrides, and lactones, and any combination thereof.

The transesterification agent may be an organic carbonate. The organic carbonate may be selected from the group consisting of ethylene carbonate, propylene carbonate, glycerine carbonate, butylene carbonate, diethyl carbonate, and any combination thereof.

Preferably, during the step of combining, includes heating within a temperature range from about 40 °C to about 160 °C.

Preferably, the step of combining is in the presence of less than 5% by weight water relative to the water-soluble polysaccharide.

Preferably, the modified polysaccharide is further characterized as having a slower hydration rate or increased hydration temperature relative to the water-soluble polysaccharide under pH of less than 8, but the hydration rate can be increased or the hydration temperature can be decreased by adjusting the pH to be greater than 8.5.

Preferably, the method further comprises the step of: before, during, or after the step of introducing, adjusting the pH of the treatment fluid to be greater than 8.5.

According to another aspect of the invention there is provided a method of treating a well , wherein the method comprises the steps of:
(A) forming a first fluid by mixing at least:
   (1) a concentrated water-based suspension of a modified polysaccharide,
      wherein the modified polysaccharide is at a concentration of at least 20% by weight of the water in the continuous water phase,
      wherein the continuous water phase of the suspension has a pH less than or equal to 8, and
      wherein the modified polysaccharide is characterized by having been made by the process of chemically combining:
      (a) a water-soluble polysaccharide, wherein the water-soluble polysaccharide is in a solid form during the combining step; and
      (b) a transesterification agent, wherein the transesterification agent is in liquid form during the combining step;
      wherein the step of chemically combining is under substantially dry conditions;
   (2) water other than from the continuous water phase of the concentrated water-based suspension, wherein the concentration of the modified polysaccharide is less than 15% by weight of all the water in the first fluid;
   (3) a material that will confer a pH of 8.5 or greater to all the water in the first fluid; and
(B) introducing a treatment fluid comprising the first fluid into the well.

Preferably, 90% of the modified polysaccharide has a particle size in the range of 5 micrometers to 200 micrometers.

Preferably, the continuous water phase of the suspension has a pH in the range of 2 to 8.

Preferably, the modified polysaccharide is at a concentration of at least 30% by weight of the water in the continuous water phase of the concentrated water-based suspension of a modified polysaccharide.

Preferably, the suspension is stabilized against settling by the use of a suspending aid. The concentration of the modified polysaccharide may be less than 10% by weight of all the water in the first fluid. The concentration of the modified polysaccharide may be less than 5% by weight of all the water in the first fluid.

Preferably, the method further comprises the step of mixing the first fluid with a second fluid to form the treatment fluid. The first fluid may be a base gel. The second fluid may comprise a crosslinking agent.

Preferably, the method further comprises the step of including in the first fluid or subsequently mixing with the first fluid a material that will reduce the pH of the water in the treatment fluid to less than 8.0 after a sufficient time under conditions for the modified polysaccharide to be converted back to the water-soluble polysaccharide and be fully hydrated.

Preferably, the treatment fluid is the first fluid.

Preferably, the treatment fluid is introduced into the subterranean formation at or above a pressure sufficient to create at least one fracture in the formation.

Preferably, the method further comprises the step of flowing back fluid from the well.

It should be understood by a person of skill in the art that the modified polysaccharide can be one or more different modified polysaccharides, the water-soluble polysaccharide can be one or more different water-polysaccharides, that the transesterification agent can be one or more different transesterification agents, and that the material that will confer a pH can be one or more different materials, such as one or more Bronsted bases. In addition, it should be understood by a person of skill in the art that the base can be previously mixed with the water that is other than from the continuous water phase of the concentrated water-based suspension.

The features and advantages of the present invention will be apparent to those skilled in the art. While numerous changes may be made by those skilled in the art, such changes are within the scope of the invention.

### BRIEF DESCRIPTION OF THE DRAWINGS

The accompanying drawings are incorporated into the specification to help illustrate examples according to the presently most-preferred embodiment of the invention.

**Figs. 1a** and **1b** are graphs showing viscosity (in Pascals) vs. shear rate (1/s) for a 40 lb/Mgal (4.8 kg/m³) concentration in deionized water of the following (in each case without adjusting pH):
(a) unmodified xanthan (control);
(b) ethylene carbonate modified xanthan ("EC");
(c) glycerine carbonate modified xanthan ("GC");
(d) butylene carbonate modified xanthan ("BC");
(e) propylene carbonate modified xanthan ("PC"); and
(f) diethyl carbonate modified xanthan ("DEC").

**Figs. 2a** and **2b** are graphs showing shear storage modulus (G' in Pascals) vs. stress (in Pascals) for a 40 lb/Mgal (4.8 kg/m³) concentration in deionized water of the following (in each case without adjusting pH):
(a) unmodified xanthan (control);
(b) ethylene carbonate modified xanthan ("EC");
(c) glycerine carbonate modified xanthan ("GC");
(d) butylene carbonate modified xanthan ("BC");
(e) propylene carbonate modified xanthan ("PC"); and
(f) diethyl carbonate modified xanthan ("DEC").

**Figs. 3a** and **3b** are graphs showing G' vs. frequency (Hertz or 1/s) for a 40 lb/Mgal (4.8 kg/m³) concentration in deionized water of the following (in each case without adjusting pH):
(a) unmodified xanthan (control);
(b) ethylene carbonate modified xanthan ("EC");
(c) glycerine carbonate modified xanthan ("GC");
(d) butylene carbonate modified xanthan ("BC");
(e) propylene carbonate modified xanthan ("PC"); and
(f) diethyl carbonate modified xanthan ("DEC").

**Fig. 4** is a graph showing viscosity (cP) at 40 sec(-1) as a function of time and temperature up from about room temperature (that is, about 25 °C) up to as high as about to 85 °C (as shown in the graph) for a 40 lb/Mgal (4.8 kg/m³) concentration in deionized water of the following (in each case without adjusting pH):
(a) unmodified xanthan (control);
(b) ethylene carbonate modified xanthan ("EC");
(c) glycerine carbonate modified xanthan ("GC"); and
(d) butylene carbonate modified xanthan ("BC").

**Fig. 5** is a graph of the hydration rate at 30 rpm for a 40 lb/Mgal (4.8 kg/m³) concentration in deionized water of the following (in each case without adjusting pH):
(a) unmodified xanthan (control);
(b) ethylene carbonate modified xanthan ("EC");
(c) glycerine carbonate modified xanthan ("GC");
(d) butylene carbonate modified xanthan ("BC");
(e) propylene carbonate modified xanthan ("PC"); and
(f) diethyl carbonate modified xanthan ("DEC").

**Fig. 6** is a graph of viscosity (cP) vs. concentration (% by weight) for a 40 lb/Mgal (4.8 kg/m³) concentration in deionized water of the following (in each case without adjusting pH):
(a) unmodified xanthan (control);
(b) ethylene carbonate modified xanthan ("EC"); and
(c) glycerine carbonate modified xanthan ("GC").

**Fig. 7** is a graph of viscosity (cP) vs. time (minutes) with increasing temperature to 250 °F (121°C) (as shown in the graph) for the following in deionized water (in each case without adjusting pH):
(a) dissolved unmodified xanthan gel (40 lb/Mgal) (4.8 kg/m³) plus addition of solid unmodified xanthan (80 lb/Mgal) (9.6 kg/m³); and
(b) dissolved unmodified xanthan gel (40 lb/Mgal) (4.8 kg/m³) plus addition of solid ethylene carbonate modified xanthan ("EC") (80 lb/Mgal) (9.6 kg/m³).

**Fig. 8** is a graph of the viscosity (cP) vs. time (minutes) with increasing temperature to 250 °F (121°C) (as shown in the graph) for the following in 2% KCl made up with deionized water, where each sample is first heated and cooled back to room temperature before reheating (in each case without adjusting pH):
(a) dissolved unmodified xanthan gel (40 lb/Mgal) (4.8 kg/m³) plus addition of solid (undissolved) unmodified xanthan (80 lb/Mgal) (9.6 kg/m³); and
(b) dissolved unmodified xanthan gel (40 lb/Mgal) (4.8 kg/m³) plus addition of solid (undissolved) ethylene carbonate modified xanthan ("EC") (80 lb/Mgal) (9.6 kg/m³).

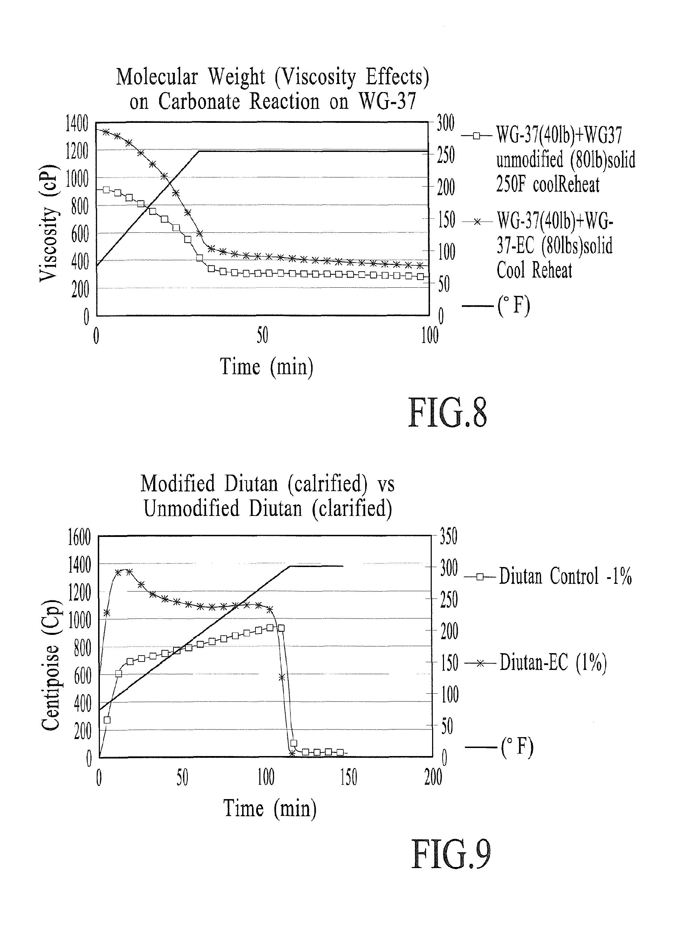

**Fig. 9** is a graph of viscosity (cP) vs. time (minutes) with increasing temperature to 300 °F (149°C) (as shown on the graph) for the following in deionized water (in each case without adjusting pH):
(a) unmodified diutan (clarified) (1% by weight); and
(b) ethylene carbonate modified diutan (clarified) ("EC") (1% by weight).

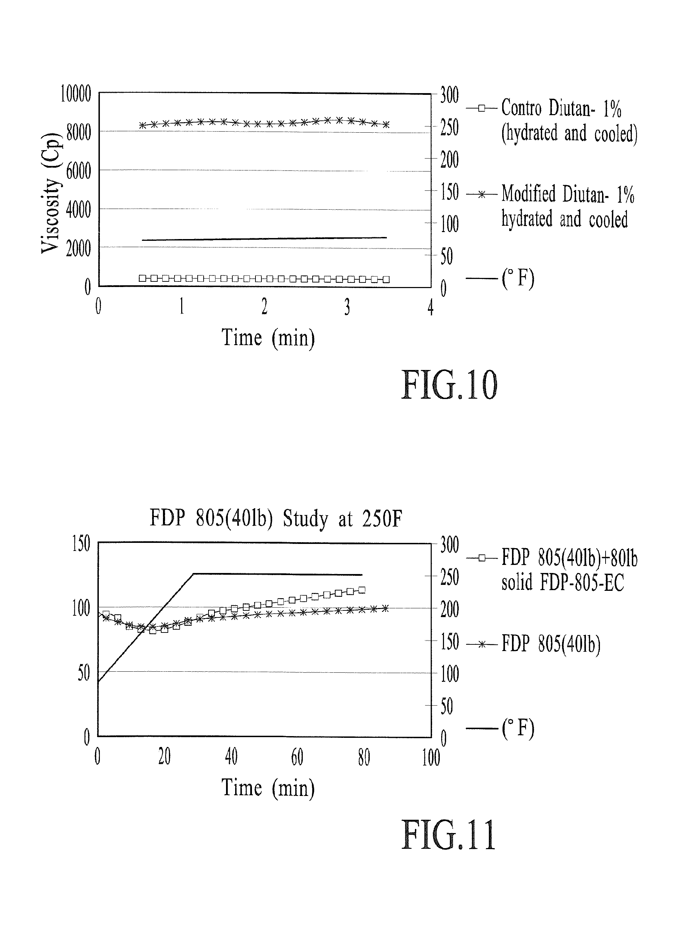

**Fig. 10** is a graph of viscosity (cP) vs. time (minutes) at about room temperature (75 °F) (24 °C) (as shown in the graph) for the following in tap (in each case without adjusting pH):
(a) water unmodified diutan (1% by weight);
(b) ethylene carbonate modified diutan ("EC") (1% by weight).

**Fig. 11** is a graph of viscosity (cP) vs. time (minutes) with increasing temperature to 250 °F (121°C) (as shown in the graph) for the following in deionized water (in each case without adjusting pH):
(a) unmodified scleroglucan (40 lbs/Mgal) (4.8 kg/m³); and
(b) unmodified scleroglucan (40 lbs/Mgal) (4.8 kg/m³) plus 80 lbs (36 kg) solid (undissolved) modified scleroglucan of ethylene carbonate ("EC").

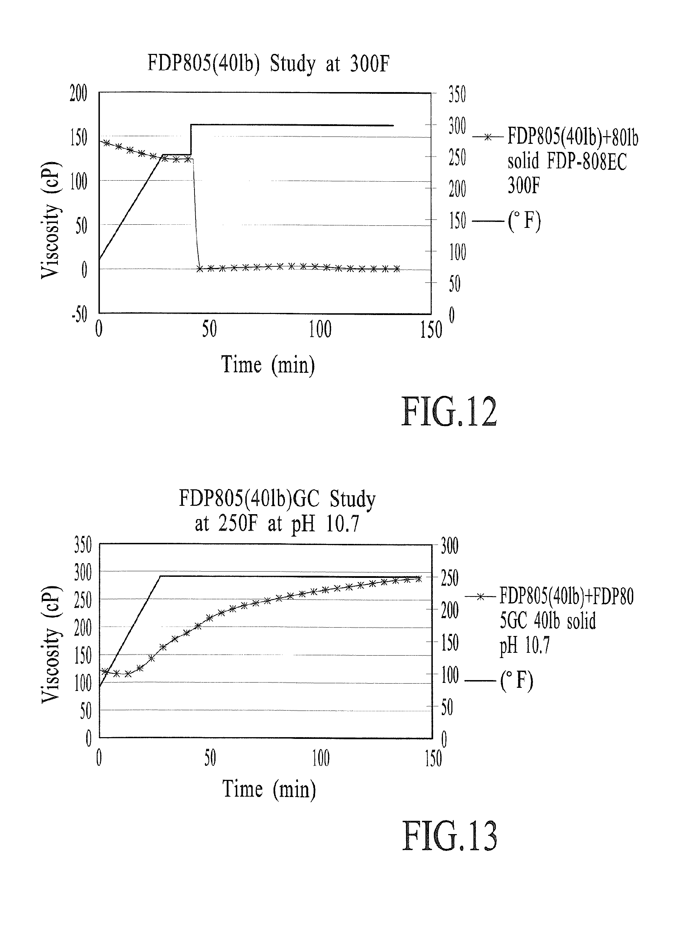

**Fig. 12** is a graph of viscosity (cP) vs. time (minutes) with increasing temperature to 300 °F (149°C) (as shown in the graph) for the following in deionized water (without adjusting pH):
(a) unmodified scleroglucan (40 lbs/Mgal) (4.8 kg/m³) plus 80 lbs (36 kg) solid (undissolved) ethylene carbonate modified scleroglucan ("EC") (without adjusting pH).

**Fig. 13** is a graph of viscosity (cP) vs. time (minutes) with increasing temperature to 250 °F (121°C) (as shown in the graph) for the following in deionized water:
(a) unmodified scleroglucan (40 lbs/Mgal) (4.8 kg/m³) plus solid (undissolved) glycerine carbonate modified scleroglucan ("GC") (40 lbs/Mgal) (4.8 kg/m³) at ph 10.7.

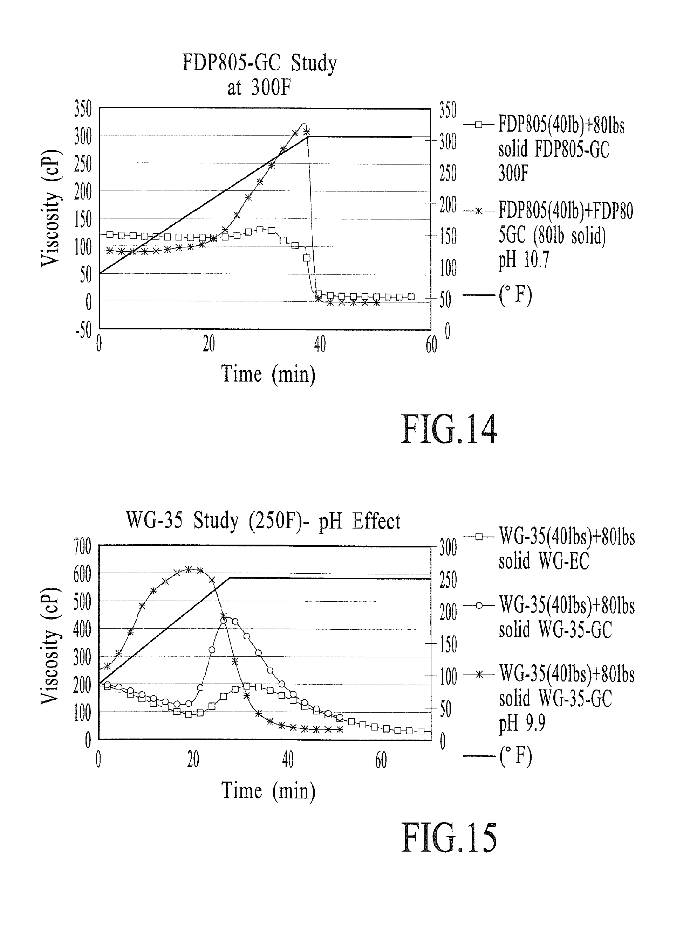

**Fig. 14** is a graph of viscosity (cP) vs. time (minutes) with increasing temperature to 300 °F (149°C) (as shown on the graph) for the following in water at pH 10.7:
(a) unmodified scleroglucan (80 lbs/Mgal) (9.6 kg/m³) plus solid (undissolved) glycerine carbonate modified scleroglucan ("GC") (40 lbs/Mgal) (4.8 kg/m³).

**Fig. 15** is a graph of viscosity (cP) vs. time (minutes) with increasing temperature to 250 °F (121°C) (as shown on the graph) for the following in water:
(a) unmodified guar (40 lbs/Mgal) (4.8 kg/m³) plus solid (undissolved) ethylene carbonate modified guar ("EC") (80 lbs/Mgal) (9.6 kg/m³) without adjusting pH;
(b) unmodified guar (40 lbs/Mgal) (4.8 kg/m³) plus solid (undissolved) glycerine carbonate modified guar ("GC") (80 lbs/Mgal) (9.6 kg/m³) without adjusting pH; and
(c) unmodified guar (40 lbs/Mgal) (4.8 kg/m³) plus solid (undissolved) glycerine carbonate modified guar ("GC") (80 lbs/Mgal) (9.6 kg/m³) at pH 9.9.

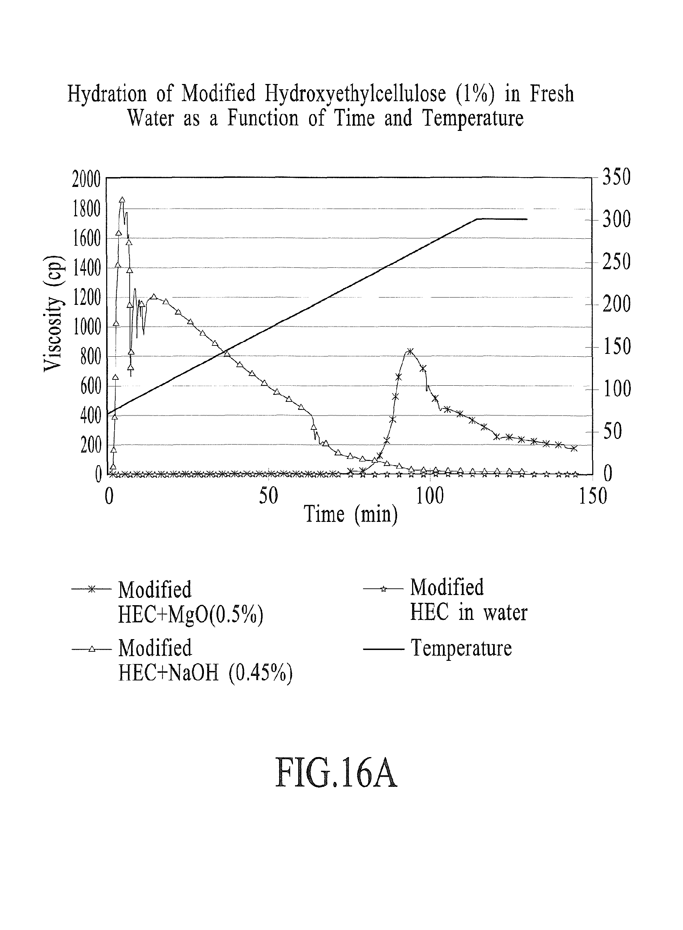

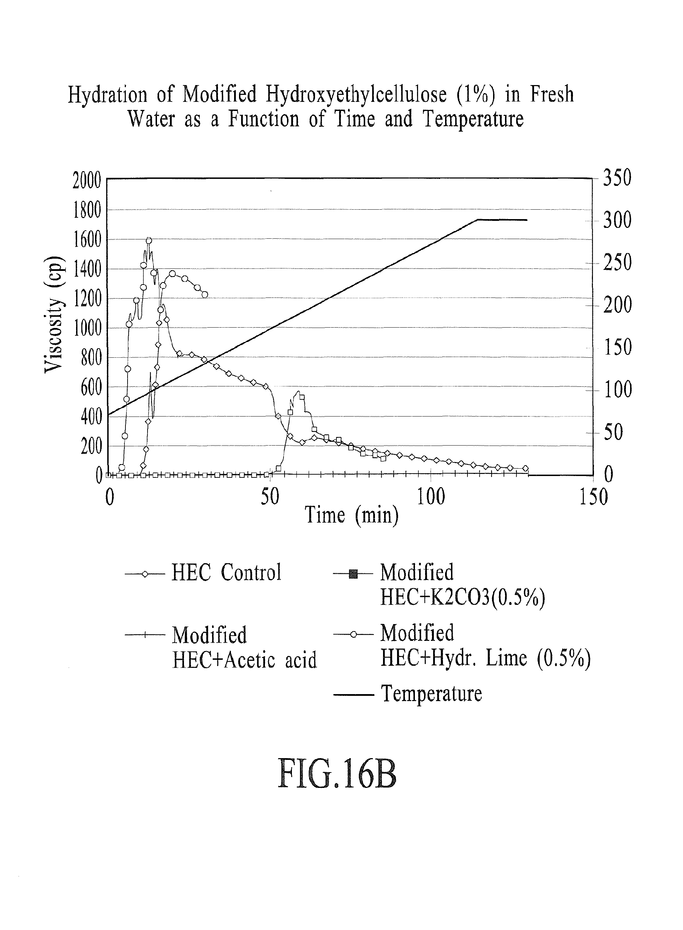

**Figs. 16a** and **16b** are graphs of viscosity (cP) vs. time (minutes) with increasing temperature to 300 °F (149°C) (as shown on the graph) at 1% by weight in deionized water for the following:
(a) unmodified hydroxyethyl cellulose ("HEC");
(b) ethylene carbonate modified HEC ("EC");
(c) ethylene carbonate modified HEC ("EC") with added acetic acid;
(d) ethylene carbonate modified HEC ("EC") with added NaOH;
(e) ethylene carbonate modified HEC ("EC") with added K₂C0₃;
(f) ethylene carbonate modified HEC ("EC") with added MgO; and
(g) ethylene carbonate modified HEC ("EC") with added hydrated lime.

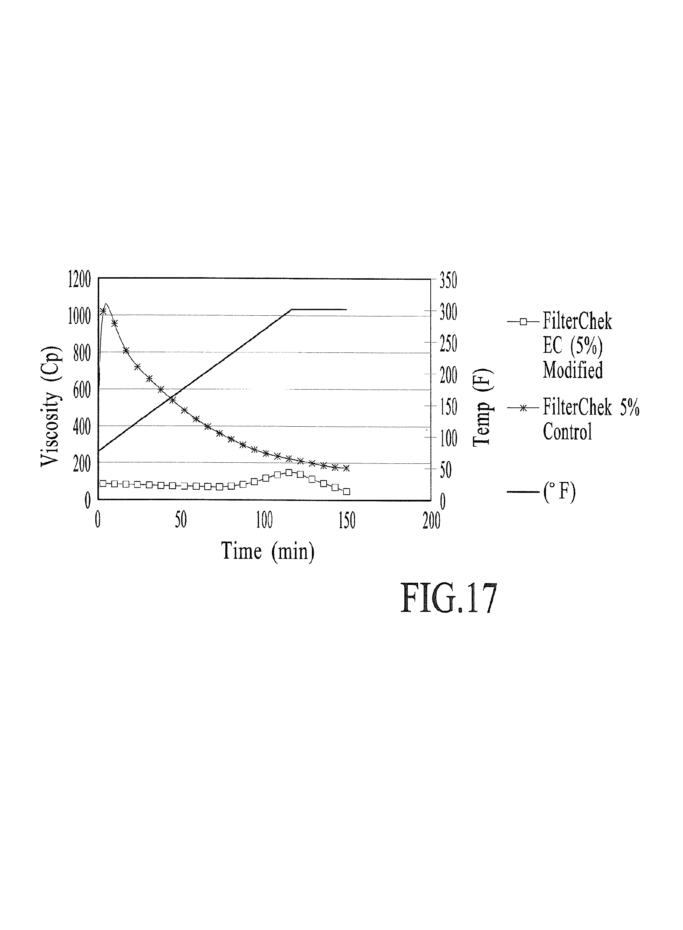

**Fig. 17** is a graph of viscosity (cP) vs. time (minutes) with increasing temperature to 300 °F (149°C) (as shown on the graph) for the following in water (in each case without adjusting pH):
(a) a conventionally modified starch (commercially available from Halliburton Energy Services under as "FILTERCHECK") at 5% by weight of water; and
(b) ethylene carbonate modified "FILTERCHECK" of ("EC") at 5% by weight of water.

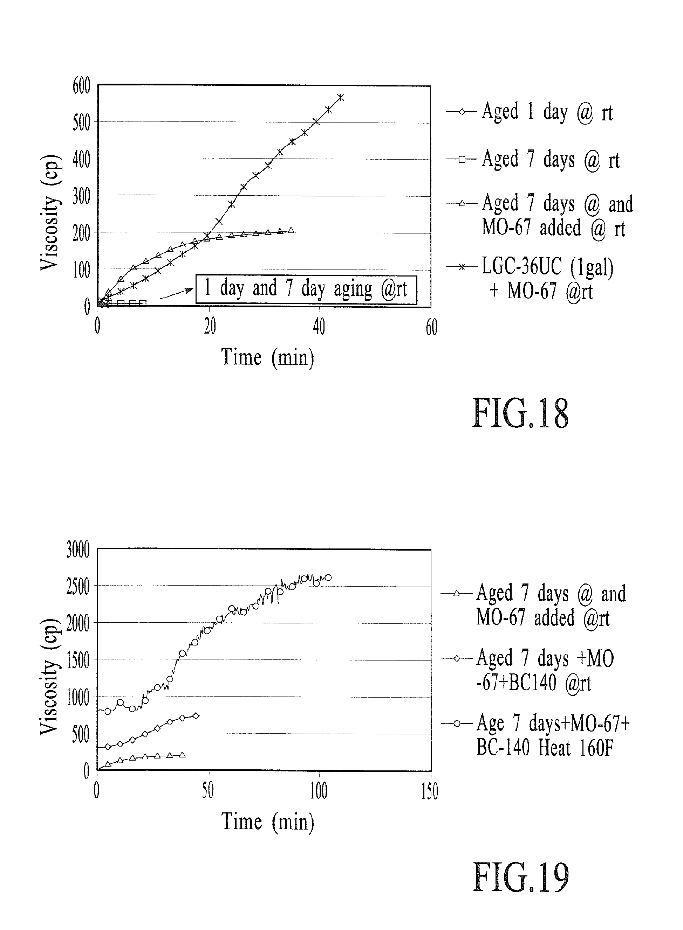

**Fig. 18** is a graph of viscosity (cP) vs. time (minutes) at room temperature for hydration of the following in water:
(a) "LGC 36UC" (an LGC of WG-37™) with MO-67 (a sodium hydroxide solution);
(b) ethylene carbonate modified guar aged 1 day at room temperature;
(c) ethylene carbonate modified guar aged 7 days at room temperature; and
(d) ethylene carbonate modified guar aged 7 days at room temperature and then mixed with MO-67 (a sodium hydroxide solution).

**Fig. 19** is a graph of viscosity (cP) vs. time (minutes) at stated temperature for hydration of the following in water:
(a) ethylene carbonate modified guar aged 7 days at room temperature and then mixed with MO-67 (a sodium hydroxide solution) at room temperature;
(b) ethylene carbonate modified guar aged 7 days at room temperature and then mixed with MO-67 (a sodium hydroxide solution) and BC-140 (a borate cross-linker) at room temperature; and
(c) ethylene carbonate modified guar aged 7 days at room temperature and then mixed with MO-67 (a sodium hydroxide solution) and BC-140 (a borate cross-linker) heated at 160 °F (71°C).

### DETAILED DESCRIPTION OF THE INVENTION

The chemical modification of polysaccharides with transesterification agents was carried out for use in oil field applications. More particularly, the chemical modification of polysaccharides using organic carbonate was carried out. It is believed that other transesterification agents can be used.

U.S. Patent No. 5,484,903 issued January 16, 1996 to Klaus Szablikowski, Hans-Josef Buysch, and Alexander Klausener discloses in the Abstract "a process for the production of carbonic acid esters of polysaccharides which is characterized in that polysaccharides are reacted with carbonic acid esters." U.S. Patent No. 5,484,903 is incorporated herein by reference in its entirety.

One of the differences of the present inventions from other transesterifications with an organic carbonate, however, is that the polysaccharide is reacted with the organic carbonate in a substantially dry, solvent free, solid state to produce a solid product in the absence of any added bases or catalysts as hereinafter described in detail to obtain modified polysaccharides.

### General Definitions and Usages

As used herein, the words "comprise," "have," "include," and all grammatical variations thereof are each intended to have an open, non-limiting meaning that does not exclude additional elements or steps.

Unless otherwise specified, any ratio or percentage means by weight. As used herein, by weight of water (or other solvent) means by weight of the water exclusive of any other solutes or other suspended materials in the water (or other solvent).

Unless otherwise specified, any doubt regarding whether units are in U.S. or Imperial units, where there is any difference U.S. units are intended herein. For example, "gal/Mgal" means U.S. gallons per thousand U.S. gallons.

Unless otherwise specified, as used herein, the viscosity of a fluid is measured at 40 sec-1 and at room temperature of about 77 °F (25 °C).

As used herein, "first," "second," etc. may be arbitrarily assigned and are merely intended to differentiate between two or more fluids, aqueous solutions, concentrations, viscosities, pumps, etc., as the case may be. Furthermore, it is to be understood that the mere use of the term "first" does not require that there be any "second," and the mere use of the word "second" does not require that there by any "third," etc.

### Water-Soluble Polysaccharides and Polysaccharide Derivatives

Water-soluble polysaccharides and water-soluble polysaccharide derivatives are used in the oil and gas industry to viscosify a fluid for use in a well treatment. In general, the purpose of using such a polysaccharide or polysaccharide derivatives is to increase the ability of the fluid to suspend and carry particulate.

Polysaccharides can be classified as being helical or non-helical (or random coil type) based on their solution structure in aqueous media. Examples of helical polysaccharides include xanthan, diutan, and scleroglucan, and derivatives of any of these. Examples of non-helical polysaccharides include guar, guar derivatives, and cellulose derivatives.

As used herein, "derivative" means a compound or substance formed by a chemical process from a parent compound or substance, wherein the chemical skeleton of the parent exists in the derivative. The chemical process preferably includes at most a few chemical reaction steps, and more preferably only one or two chemical reaction steps. As used herein, a "chemical reaction step" is a chemical reaction between two chemical reactant species to produce at least one chemically different species from the reactants, regardless of the number of transient chemical species that may be formed in the reaction. An example of a chemical step is a substitution reaction. A substitution on a polymeric material may be partial or complete.

A guar derivative can be selected from the group consisting of a carboxyalkyl derivative of guar, a hydroxyalkyl derivative of guar, and any combination thereof. Preferably, the guar derivative is selected from the group consisting of carboxymethylguar, carboxymethylhydroxyethylguar, hydroxyethylguar, carboxymethylhydroxypropylguar, ethylcarboxymethylguar, and hydroxypropylmethylguar.

A cellulose derivative can be selected from the group consisting of a carboxyalkyl derivative of cellulose, a hydroxyalkyl derivative of cellulose, and any combination thereof. Preferably, the cellulose derivative is selected from the group consisting of carboxymethylcellulose, carboxymethylhydroxyethylcellulose, hydroxyethylcellulose, methylcellulose, ethylcellulose, ethylcarboxymethylcellulose, and hydroxypropylmethylcellulose.

As used herein, a polysaccharide is considered to be water-soluble if it is soluble to the extent of at least 10 grams per liter in deionized water at 25 °C. More preferably, the water-soluble polymer is also soluble to the extent of at least 10 grams per liter in an aqueous sodium chloride solution of 32 grams sodium chloride per liter of deionized water at 25 °C. If desired, the water-soluble polymer can be mixed with a surfactant to facilitate its solubility in the water or salt solution utilized. The water-soluble polymer can have an average molecular weight in the range of from about 50,000 to 20,000,000, most preferably from about 100,000 to about 500,000. A water-soluble polymer having an average molecular weight of about 50,000 typically has a viscosity when dissolved in distilled water in the amount of about 3.6 % by weight of the solution at 19 °C of from about 10 to about 500 centipoise ("cP").

### Transesterification Agent

As used herein, a "transesterification agent" is an organic compound containing at least one ester functional group capable of undergoing conventional transesterification reactions with hydroxyl groups in a polysaccharide such as xanthan, diutan, or guar. As an example of the requirements for being a transesterification agent, the chemical functionality for the reaction must be sufficiently sterically unhindered for the chemical reaction with the polysaccharide.

Even though the organic compounds being reacted with polysaccharides in the solid state are referred to as "transesterification agents," it should be noted that the term does not necessarily imply that the reactions between the transesterification agents and polysaccharides are necessarily transesterification reactions between the alcohol groups of the polysaccharides and the ester groups of the transesterification agents. While such reactions are presently believed to be possible, no conventional methods were employed in the process to encourage and promote transesterification reactions. For example, there was no addition of acid catalysts, either of Lewis acid or Bronsted acid types, or weakly basic catalysts such as triphenylphosphine, and no techniques such as azeotropic removal of alcohol by-products.

Preferably, a transesterification agent contains at least two ester (-COOR₁) functional groups, or at least one carbonate ester (R₂OC(O)OR₃) group, wherein R₁, R₂ and R₃ are alkyl or alkylene groups, which can be the same or different.

A preferred example of a transesterification agent is a non-polymeric organic carbonate. Non-polymeric organic carbonates are commercially available, and some of them are marketed as environmentally preferred and cost-effective solvents. The organic carbonate group may be part of a cyclic structure or may be an acyclic carbonate. Examples of non-polymeric cyclic organic carbonates that are capable of transesterification reactions with a polysaccharide include ethylene carbonate, propylene carbonate, glycerine carbonate (also known as glyceryl carbonate), and butylene carbonate, and an example of a non-polymeric acyclic carbonate is diethyl carbonate.

Suitable carbonates may be liquids at room temperature (about 25°C) or low melting solids. Suitable low melting solids are those with a melting temperature that is lower than the combining temperature when reacted with a polysaccharide. Ethylene carbonate is a solid (with a low melting point of 37-39 °C) and the other carbonates listed above are liquids at room temperature (about 25 °C).

The carbonate functionality is chemically reactive in the presence of suitable functional groups, for example, alcohol, thiols, carboxylic acids, carboxylic acid anhydrides, and amine groups. However, the type of products formed between compounds containing above listed functional groups and an organic carbonate depend on the reaction conditions. For example, in the presence of a base such as sodium hydroxide or a quaternary ammonium halide under aqueous conditions, the reaction between a compound containing alcohol (hydroxyl groups) and an organic carbonate, for example ethylene carbonate, is a hydroxyethylation reaction, and not a transesterification reaction. *See* US Patent No. 4,474,951, incorporated herein by reference; *see also*, Indian Journal of Chemistry, vol 9, pages 1081-1082 (1971). The resulting hydroxyethylated products show enhanced water solubilities. For example, insoluble cellulose can be hydroxylated in this manner to form water-soluble hydroxyethyl cellulose. On the other hand, using an acidic (Lewis or Bronsted type) or weakly basic catalysts, the reaction between the same compounds is a transesterification reaction, wherein either one or both the ester functionalities of the organic carbonate can undergo transesterification reactions. Such reactions typically employ solvents. Reactions of organic carbonates, particularly cyclic alkylene carbonates are described in a review article by John H Clements, in Ind. Eng. Chem. Res, 2003, 42, 663-674 and JEFFSOL Alkylene Carbonates (technical Bulletin); Huntsman Petrochemical Corporation: Austin, TX, 2001.

Based on this study and principles of organic chemistry, it is presently believed that other compounds such as cyclic carbamates, organic esters, carboxylic acid anhydrides, and lactones will provide similar benefits in the modification of polysaccharides as do the organic carbonates, and hence are contemplated to fall under the scope of the present invention.

Suitable transesterification agents containing at least two ester functional groups include those that contain 0 to 4 carbons between the ester functional groups, as in R₄OOC - (CXY)-COOR₅, wherein R₄ and R₅ are alkyl or alkylene groups and X and Y are independently hydrogen, alcohol, or ether groups. Examples of suitable ester molecules include diethyl tartarate, trimethyl citrate, diethyl succinate, diethyl malonate, diethyl dimethyl adipate, and diethyl oxalate.

Examples of transesterification agents containing a single ester group include ethylacetate, ethyl benzoate, and butyl acetate. Based on the present study, it is believed that when monoesters are used, the modified polysaccharides may be rendered insoluble without a molecular weight increase, whereas use of reagents containing at least two ester groups may insolubilize the polysaccharides while increasing its molecular weight.

Examples of transesterification agents of carboxylic acid anhydrides include acetic anhydride, succinic anhydride, propionic anhydride, and octenyl anhydride.

Examples of transesterification agents of lactones include lactide, glycolide, butyrolactone, and hydroxybutyrolactone.

### Step of Modifying Solid Polysaccharide under Dry Conditions

In the following laboratory examples, a polysaccharide in solid state was treated as follows. The polysaccharide in a granular form was spread out in a thin layer. The organic carbonate in liquid form was added dropwise by a pipette with vigorous intermittent shaking of the solid during the addition in order to expose fresh solid surface and to form a substantially homogeneous liquid coating of the organic carbonate on the solid polysaccharide. The organic carbonate or other transesterification agent is preferably selected for being in liquid form at room temperature and one atmosphere pressure or being a low melting solid which having a melting point below the reaction temperatures. A mixture of two or more organic carbonates may be used to modify the polysaccharide or its derivatives. In the case where the organic carbonate is a solid at room temperature, for example, ethylene carbonate, the solid carbonate was finely ground to greater than 40 mesh (0.4 mm) size prior to mixing with solid polysaccharide, and the resulting mixture was mixed thoroughly by shaking.

As used herein, "substantially dry conditions" means in the presence of less than 10% by weight water relative to the water-soluble polysaccharide. If any water or moisture is present, the water is at a pH of 8 or less. More preferably, any water is less than 5% by weight relative to the water-soluble polysaccharide. Most preferably, the water-soluble polysaccharide is essentially dry, having less than 1% by weight water or moisture.

No acidic or mild base catalysts, or basic materials, such as sodium hydroxide are required. No solvents are needed during the chemical reaction phase. More preferably, excluded from the reaction mixture are chemicals containing reactive hydrogen atoms, e.g., those that contain free hydroxyl, mercapto, carboxylic acid, carboxylic acid anhydride, imido, and amido groups. In addition, non-aqueous solvents are preferably avoided, except as an option in the case of an organic carbonate that is a solid at the reaction temperature, which may require a small amount of an organic solvent to dissolve or liquefy the carbonate. The solvent used to dissolve a solid carbonate should not contain the reactive groups mentioned above, and may be removed in a step prior to the reaction phase, for example prior to heating the mixture to the desired reaction temperature. This avoids undesired chemical reactions that would otherwise occur (or at least prematurely) with chemicals containing active hydrogen atoms, especially under high pH conditions (that is, pH greater than 8). This is believed to help achieve the characteristics of the modified polysaccharide, which provides rheological and other characteristics useful in well treatments. In addition, avoiding the use of solvents in the production of modified polysaccharide is economically advantageous, and avoids introducing undesirable solvents into a well treatment fluid and, ultimately, into a well. Furthermore, obtaining the final reaction product directly as a solid at the end of the production phase saves cost in removing and disposing solvents if the reactions were to be done in solvents such as water or organic solvents.

The weight ratio of polysaccharide to the transesterification agent is preferably in the range of 1:0.01 to about 1:0.5, and more preferably in the range of 1:0.05 to about 1:0.25.

The reaction time at temperature should be sufficient for reaction to proceed to substantial completion. Preferably, the solid polysaccharide and organic carbonate are heated to promote chemical reaction. The heating should not exceed the caramelization or decomposition temperature of the polysaccharide, whichever is lower. Most preferably, the polysaccharide and organic carbonate are heated to within a temperature range from about 40 °C to about 160 °C, provided the heating is less than the caramelization temperature of the polysaccharide. Similarly, the reaction is conducted at a temperature that is at least above the freezing/melting temperature of the organic carbonate. It is preferred that the reaction is conducted in a roller oven so that reaction mixture is rolled during the reaction to ensure homogeneous blending of the reaction components. The reaction can be conducted at any convenient pressure, provided the organic carbonate remains in liquid form at the reaction temperature. In the following examples, the solid polysaccharide and organic carbonate were heated to about 82 °C for about 6 to 24 hours. The completion of reaction can be monitored by techniques such as thermogravimetric analysis ("TGA").

Preferably, the granular form of the solid polysaccharide has a mesh size in the range of about 80 to about 200 (0.2 mm - 0.07 mm). In case the polysaccharide has significant amounts of moisture adsorbed or retained, a dehydration step to reduce the moisture content below 10% by weight of the polysaccharide, and most preferably below 1% by weight of the polysaccharide can be included prior to exposure to the organic carbonate. This process combines the solid polysaccharide and the organic carbonate, provides sufficient contact for chemical reaction, and provides a solid, granular product.

Thus, the modified polysaccharide is preferably in a free-flowing, solid state after treatment with the transesterification agent.

For a commercial application, the combination would preferably be more uniform or the materials could be mixed, for example, by spray coating the liquid carbonate on to the polysaccharide solid spread on a conveyor belt. In a commercial application, the method of treatment presently believed to be as simple as hot-drum rolling of the polysaccharide and the organic carbonate mix for specific duration. In the case of solid carbonate, the carbonate may be melted and spray coated on the polysaccharide solid. Alternately, the pulverized solid carbonate and solid polysaccharide can be simply dry blended. Alternately, if not in liquid form or if otherwise desired, the organic carbonate can be dissolved in an organic solvent. Preferably, only a sufficient amount of organic solvent would be used to dissolve the organic carbonate to provide a liquid form at the desired reaction temperature and pressure. But most preferably, the polysaccharide and the organic carbonate are combined without any solvent for either the polysaccharide or the organic carbonate.

### Properties of Polysaccharides Modified with Transesterification Agent:

It is now found that solid polysaccharides, for example xanthan, diutan, scleroglucan, gums, cellulose, starch, and derivatives of these, can be reacted with organic carbonates forming products that when added to water:
(1) have increased viscosifying efficiency, i.e., higher viscosities at reduced concentrations; or
(2) are insolubilized at normal temperature ranges at which unmodified precursors hydrate fully and dissolve; or
(3) both properties.

The chemical modification of solid polysaccharides with organic carbonates lead in some cases to increase in viscosity, while retaining hydration behavior similar to that for unmodified polysaccharide. In some cases, the chemical modification resulted in severe loss in hydratability at room temperature.

In addition, it is now found that the polymers with severely limited hydratability due to reactions with organic carbonates can be hydrated in a controlled manner at higher temperatures or higher pH values.

In general, the results of the study show that treatment of helical (double helix or triple helix) polysaccharides such as xanthan, diutan, and scleroglucan in solid sate with organic carbonates increases the viscosity of polymer solutions. The hydratability of these modified polysaccharides depended not only on the organic carbonate used, but also on the polysaccharide.

In general, the results of the study show that non-helical polymers such as guar exhibited delayed hydration. In the case of helical carbonates ethylene carbonate treatment also delayed hydration rate. Use of combination of suitable organic carbonates is expected to provide products with desired combination of viscosification efficiency and hydration properties.

The delay in hydration of hydroxypropyl guar, CMHPG, and diutan modified with organic carbonates (such as ethylene carbonate or glycerine carbonate) is not significant when compared to the corresponding starting materials. However, the viscosities of the modified materials are significantly higher than the starting polymers.

Increased product viscosities for modified polysaccharides suggest increased molecular weight of the modified polysaccharide when compared to the unmodified starting polysaccharide. This was shown to be true by molecular weight measurements for one polymer. Without being limited by theory, it is theorized that the organic carbonates may participate in intramolecular transesterification reactions with alcohol groups on adjacent carbons (for example C2 and C3 carbons of hexose rings to form intra-chain carbonate groups, or between the alcohol groups on two different polymer chains to form an inter-chain carbonate groups, or most likely both. The inter-chain carbonate formation is akin to cross-linking leading to increased molecular weights, and thus increased viscosities. The intra-chain carbonate formation is likely to decrease the solubility of modified polysaccharide due to decreased number of free hydroxyl groups, which results in decreased ability to hydrogen bond with water. The ratio of intra- to inter- chain carbonate formations appears to be dependent on the polysaccharide monomer structure, polymer chain conformation in solid state, as well as the carbonate structure. Similar considerations can be applied to the reactions with transesterification agents that contain at least two discrete ester groups. Based on this study and principles of organic chemistry, it is presently believed that by using an organic monoester, the hydratability and solubility of the polysaccharides and their derivatives may be decreased without increasing the polymer molecular weight, whereas using organic ester with at least two or more ester functionalities, the product hydratability, solubility may be decreased, and/or the viscosification efficiency may be increased. From the reduced hydratability and solubility of modified polysaccharides from reactions with organic carbonates, it is clear that the reactions do not proceed via hydroxyethylation because all hydroxyethylated polysaccharides show enhanced solubilities, contrary to the observed lower solubilities in many cases.

Based on this study and principles of organic chemistry, it is presently believed that other compounds such as cyclic carbamates, organic esters, carboxylic acid anhydrides, and lactones will provide similar benefits.

### Activating Agents for the Modified Polysaccharides

The activating agents for the modified polysaccharides include any material that will confer a pH of 8.5 or greater to an aqueous solution containing the modified polysaccharide of the present invention. Activation increases the solubility or hydration rate of the modified polysaccharides. Such bases may include metal oxides, hydroxides, bicarbonates and soluble carbonate salts, ammonium hydroxide, and water-soluble or water-dispersible organic amines, and aminoalcohols. Examples of inorganic bases include alkali and alkaline metal hydroxides and oxides, such as sodium hydroxide, calcium oxide and magnesium oxide; bicarbonates such as sodium bicarbonate and soluble carbonates such sodium and potassium carbonates. Sparingly soluble bases such as magnesium and calcium oxides may offer special advantages because of slow dissolution and release of the base into solution, and thus provide an additional control on the rate of polysaccharide dissolution at a given temperature. The inorganic bases may be encapsulated for controlled adjustment of pH of the fluid. Examples of organic bases include aminoalcohols such as triethanolamines, ethanolamine, amines such as triethylamine, morpholine, and imidazole. The amount of the base material needed is sufficient to raise the pH to the desired level. The pH can remain about the same at the end of the activation.

### Cross-linking of Modified Polysaccharides with Reduced Solubility and Hydratability

Because of reduced solubility of some transesterification-agent modified polysaccharides, for example guar and its derivatives, the preferred method cross-linking of such gels for applications, such as fracturing, will involve activation of the modified solid by a base such that full viscosity due to complete dissolution of the polysaccharide is realized prior to the addition of the crosslinker such as a metal crosslinker, or a borate crosslinker. Required amounts of salt may also be added after activation of the modified polysaccharide, especially if the hydratability and solubility of the modified polysaccharide is reduced further in a salt solution when compared to fresh water.

### Applications for Modified Solid Polysaccharide

According to the inventions, a modified solid polysaccharide according to the invention has applications in well treatments, including one or more of the following:
- providing linear gel compositions for use as fracturing fluids or gravel-packing fluids that are less damaging to the formation by using reduced concentrations of the polymers to achieve desirable viscosities and rheologies than the conventionally used formulations;
- lowering the cost of currently used viscosifiers (for example, welan gum (commercially available from Halliburton Energy Services under the trade name "BIOZAN") used spacer formulations) by either replacing with more economical modified polysaccharides, for example, hydroxyethyl cellulose ("HEC"), hydroxylpropyl guar ("HPG"), and guar, or using in reduced concentrations (for example, with diutan or xanthan);
- improving the particle suspension ability of drilling, spacer, fracturing, or gravel-packing fluids;
- extending the temperature range beyond the current useful ranges of the polysaccharides; and
- compensating for thermal thinning of the polymer solutions at elevated temperatures (which otherwise would result in particle settling).

The amounts of the transesterification agent modified polysaccharides and their derivatives in the well treatment fluid may be in the range of 0.02 to 15%, preferably in the range of 0.2 to 10%, and more preferably in the range of 0.5 to 5% by weight of the water of the fluid. Preferably, the well treatment fluid contains a salt in at least 2% by weight of the water of the well treatment fluid.

### Example: Modified Xanthan

It is now found that xanthan polymer (commercially available from Halliburton Energy Services under the trade name "WG-37") when treated with the above listed carbonates can increase the viscosity. In the case of glyceryl carbonate, the increase in viscosity was almost 300 times. This shows that the modified polysaccharide can be used in significantly lower concentrations and yet achieve the same viscosity and rheological properties as the unmodified polysaccharide. Lower polymer concentrations make it easier to clean up at the end of fracturing and reduce residual polymer damage to the formation.

Viscosity measurements at different rpm values were performed using Brookfield PVS viscometer and #3 Spindle. The molecular weight measurements were done by gel permeation chromatography using 0.2M sodium nitrate solution as the carrier fluid. The results are shown in **Table 1.** The ratio of solid polymer to organic carbonate is in the range of 1.0 : 0.08 to 1.0 : 0.2 for these polymers and the heating time is 20 hours at 82°C. It should be noted that the treatment with ethylene carbonate yielded materials that hydrated slowly at room temperature, and required elevated temperatures (for example, 80 °C) for complete hydration.

**Table 1 - Xanthan and Modified Xanthan (40 lb/MGal (4.8 kg/m³) or 0.5 wt% Solutions in DI Water)**

| Carbonate | Xanthan: Carbonate Wt ratio | Viscosity @ 1.5 rpm, cP | Viscosity @ 6 rpm, cP | Viscosity @ 30 rpm, cP | Mol. Wt. | Polydispersity Index |
|---|---|---|---|---|---|---|
| None - Control | 1.0 : 0.0 | 7300 | 2530 | 680 | 3.98e+6 | 1.25 |
| Ethylene carbonate ("EC") | 1.0 : 0.132 | 9200 (Note 1) | 4300 (Note 1) | 1640 (Note 1) | 5.889e+6 | 1.06 |
| Propylene Carbonate ("PC") | 1.0 : 0.132 | 11200 | 4100 | 1040 | 6.997e+6 | 1.32 |
| Glyceryl Carbonate ("GC") | 1.0 : 0.130 | 20000 | 7600 | 2200 | 6.929e+6 | 1.50 |
| Butylene Carbonate ("BC") | 1.0 :0.122 | 12000 | 4000 | 1040 | 4.435e+6 | 1.26 |
| Diethyl Carbonate ("DEC") | 1.0 : 0.122 | 12400 | 4000 | 1000 | 5.667e+6 | 1.24 |

**Note 1** in **Table 1** - Hydrated at room temperature for 18 hours followed by hydration at 80 °C for 3 hours before submitting for molecular weight measurements. The material is still cloudy showing incomplete hydration.

The above **Table 1** shows that the molecular weight of unmodified xanthan is increased by treatment with organic carbonates, which is presently believed to explain the increased viscosities. The molecular weight data for ethylene carbonate treated material may be inaccurate, however, due to its incomplete hydration/dissolution in the water/salt solutions used for molecular weight measurements.

To show that performing the reaction between the polysaccharide and organic carbonate in dry, solid state is essential, xanthan solutions (0.5 wt% in DI water) were mixed with identical amounts of organic carbonate as used for making the modified xanthans of **Table 1** and stirred at room temperature in one case and heated to 80 °C for 20 hours in another case. In both cases, there was no viscosity increase, indicating that performing the reaction in dry, solid-state conditions is important to achieve viscosity increase. Organic carbonates when added by themselves to potassium carbonate solution (pH 10.5), hydrolyzed in few hours at room temperature and lowered pH close to about 7. These results suggest that lack of viscosity increase when organic carbonates are added to aqueous solutions of xanthan may be due to premature hydrolysis of carbonates in the presence of water.

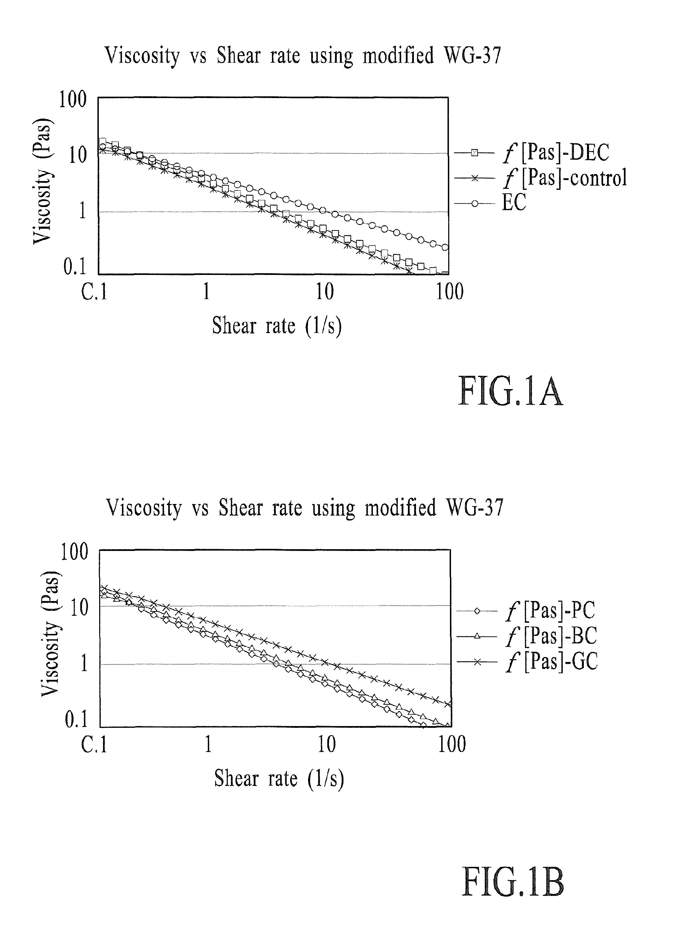

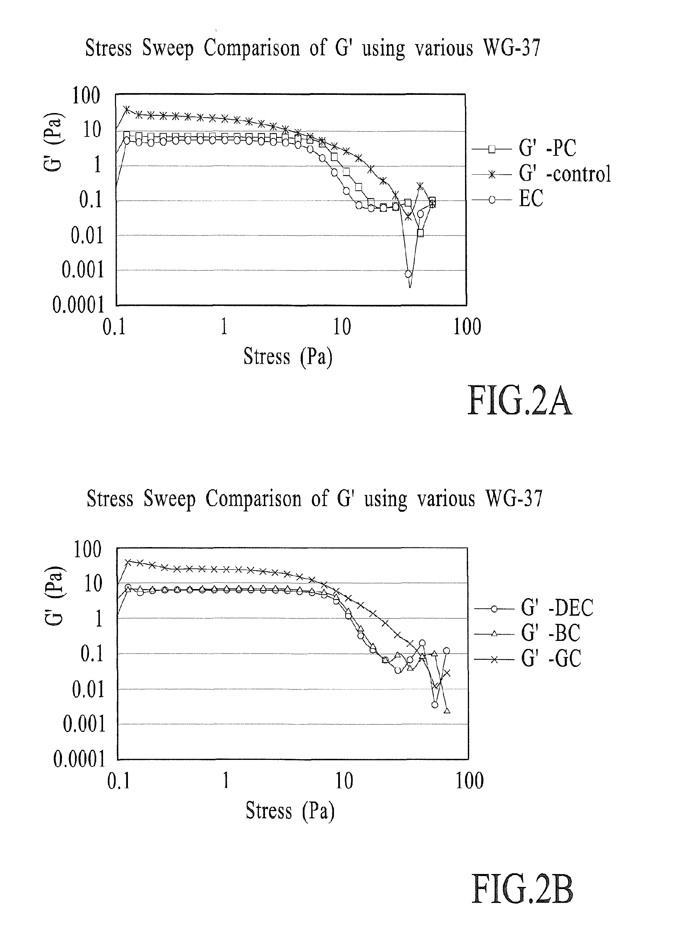

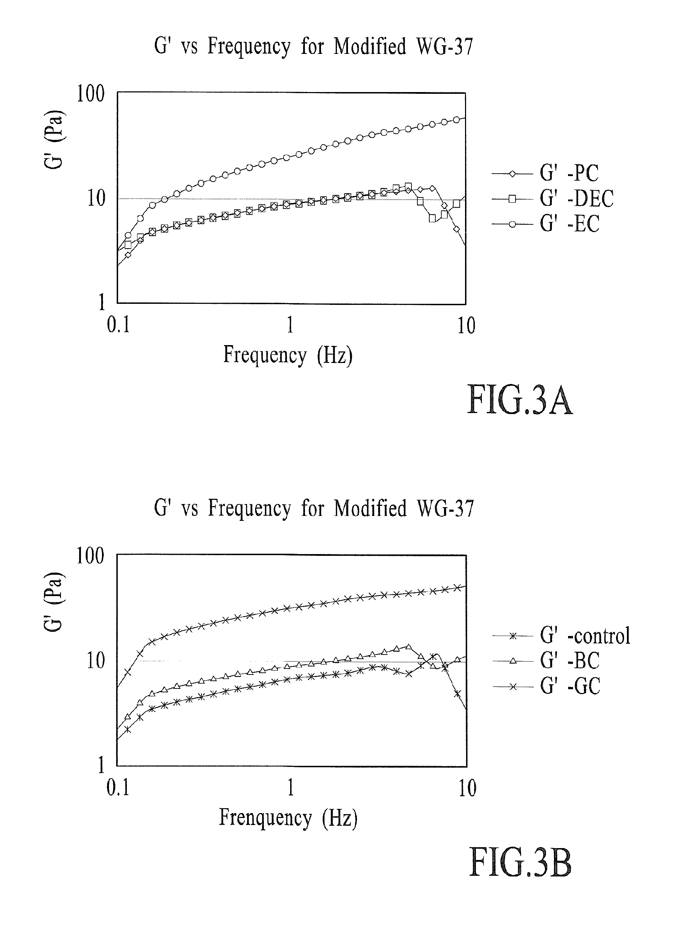

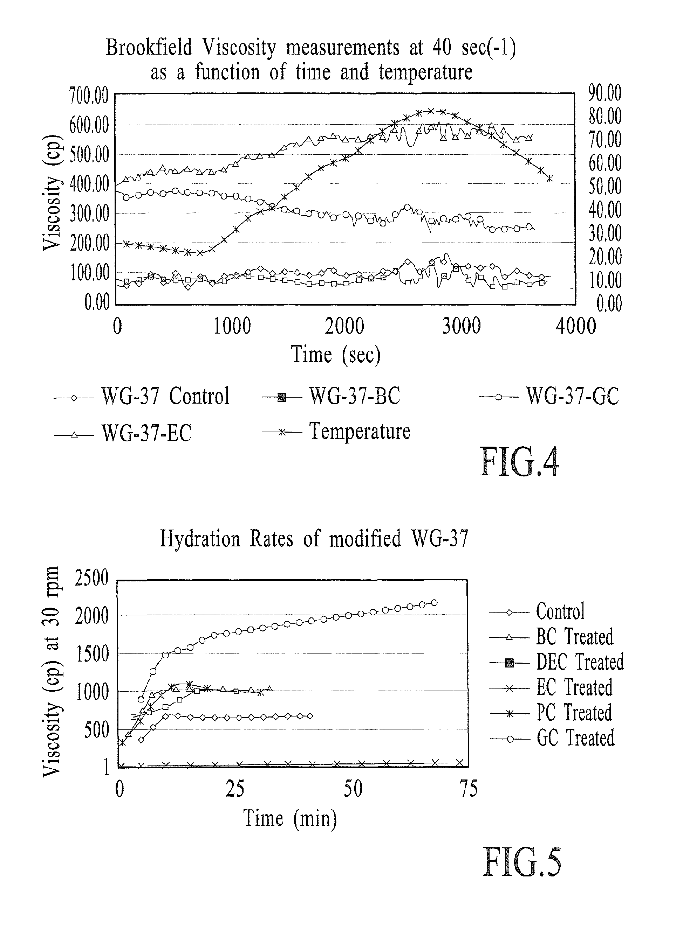

The rheologies of aqueous solutions of a xanthan control and several modified xanthans were measured on Haake instrument as well as with Brookfield PVS viscometer. The results are shown in **Figs. 1a****-b, 2a-b, 3a-b,** and **4,** which show changes in the rheological properties of the modified xanthans relative to unmodified xanthan. From **Fig. 4****,** it is clear that even at temperatures as high as 90 °C (194 °F), the viscosities of selected treated materials are significantly higher, for example for ethylene carbonate and glyceryl carbonate modified xanthans, compared to the untreated material, and are in the range useful for fracturing operations.

The hydration rates were measured and found to be similar for all these organic carbonate modified xanthans except for ethylene carbonate ("EC") treated xanthan, as shown in **Fig. 5****.**

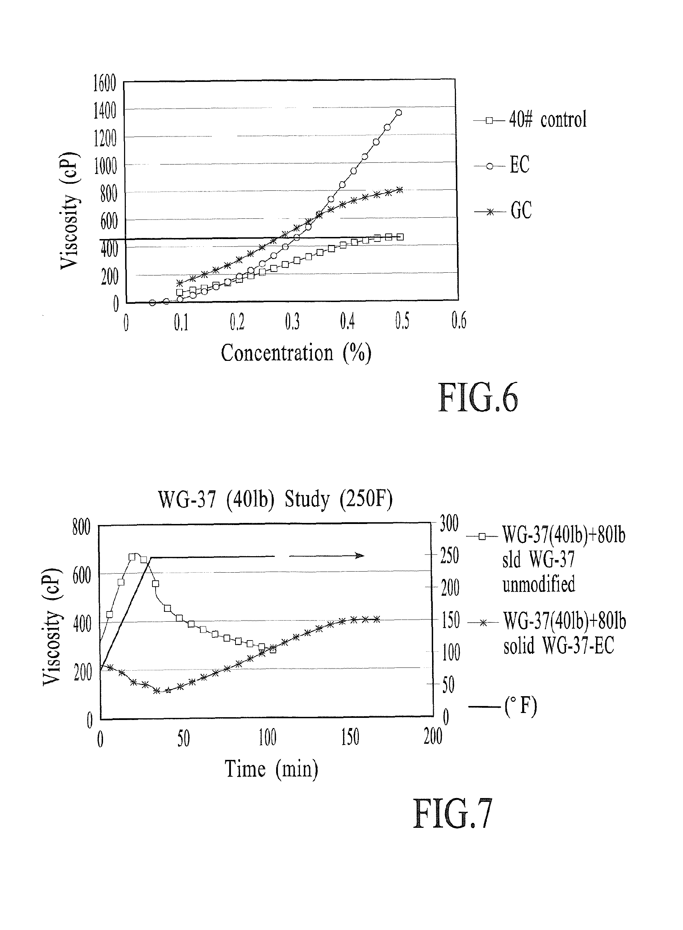

By comparing viscosities vs. polymer concentration as shown in **Fig. 6****,** it can be concluded that viscosities obtained with a 40 lb/Mgal (4.8 kg/m³) of xanthan are achievable with about 28 lb/M gal (3.4 kg/m³) glyceryl carbonate ("GC") treated polymer. Even though the ethylene carbonate ("EC") treated polymer shows also higher viscosity and hence, less polymer loading, the EC treated polymer achieves full viscosity only after heating at elevated temperature (in the present case, at 80 °C for 5-6 hours), and direct comparison with the room temperature polymer viscosities for the other polymers is not possible.

The effect of ratio of xanthan polymer to organic carbonate ratio was investigated for glyceryl carbonate and the results are provided in **Table 2.**

**Table 2 - Effect of Ratio of Xanthan Polymer to Organic Carbonate on Viscosity**

| Polymer: Carbonate Wt. ratio | Viscosity @ 1.5 rpm, cP | Viscosity @ 6 rpm, cP | Viscosity @ 30 rpm, cP |
|---|---|---|---|
| 1.0 : 0.2 | 9400 | 4025 | 1500 |
| 1.0 : 0.11 | 8800 | 3550 | 1160 |
| 1.0 : 0.085 | 9100 | 3575 | 1160 |

Salt effects were determined by the addition of 2% KCI to pre-hydrated xanthan polymer solutions in deionized ("do') water or by directly hydrating the polymer in 2% KCl solutions in deionized water. The results are summarized in **Table 3** and **Table 4.**

**Table 3 - Effects on Viscosity of Salt Addition to Prehydrated Xanthan Solutions in DI Water**

| | Xanthan: Carbonate Wt ratio | Duration of heating at 80 °C | Viscosity @ 1.5rpm, Cp | Viscosity @ 6 rpm, Cp | Viscosity @ 30 rpm, Cp |
|---|---|---|---|---|---|
| Control Xanthan Solution with no salt | 1.0 : 0.0 | None | 7300 | 2530 | 680 |
| Control Xanthan Solution with 2% KC1 | 1.0 : 0.0 | None | 7600 | 2750 | 780 |
| | | | | | |
| Xanthan-GC with no salt | 1.0 : 0.127 | 20 hrs | 9200 | 4200 | 1540 |
| Xanthan-GC with 2% KC1 | 1.0 : 0.127 | 20 hrs | 1600 | 800 | 280 |
| | | | | | |
| Xanthan-GC with no salt | 1.0 : 0.127 | 6 hours | 8400 | 3000 | 760 |
| Xanthan-GC with 2% KCl | 1.0 : 0.127 | 6 hours | 8800 | 3200 | 900 |

The above results in **Table 3** show that by optimizing the heating duration and the weight ratio of polymer to carbonate, it is possible to retain the beneficial effects of increased viscosity of organic carbonate treated xanthan polymer solutions in salt solutions.

**Table 4 - Effects on Viscosity of Hydrating Organic Carbonate Treated Solid Xanthan Polymer in 2% KCl Solutions of DI Water**

| | Xanthan: Carbonate Wt ratio | Duration of Heating at 80 °C | Viscosity @ 1.5 rpm, Cp | Viscosity @ 6 rpm, Cp | Viscosity @ 30 rpm, Cp | Hydration Time |
|---|---|---|---|---|---|---|
| Control Xanthan | 1.0 : 0.0 | None | 7600 | 2750 | 780 | |
| Xanthan-GC | 1.0 : 0.127 | 20 hours | 1300 | 550 | 235 | 22 hours |
| Xanthan-GC -at pH 7.6 | 1.0 : 0.127 | 20 hours | 4000 | 1650 | 570 | 22 hours |
| Xanthan-GC | 1.0 : 0.127 | 6 hours | 2400 | 1015 | 390 | |

The results in above **Table 4** show that longer hydration times would be needed if solid xanthan polymers are to be hydrated in brines. In order to retain the viscosity enhancement in salt solutions, it is preferred that the polymers are hydrated in fresh water first followed by addition of salt.

The following hydration experiments were conducted by starting with a 40 lb per Mgal (4.8 kg/m³) of unmodified polysaccharide gel with 2% KCl made up with deionized water, followed by addition of solid chemically modified polysaccharide (equivalent to 40-80 lb per 1,000 gal (4.8 kg/m³ - 9.6 kg/m³) to the gel and measuring viscosity (@ 40 sec-1) vs. time at a specified temperature using Chandler Model 5550 viscometer. For comparison, similar experiments were conducted by addition of solid unmodified polysaccharide. The purpose of such experiments is the following. In applications such as gravel packing, maintaining the viscosity sufficient to keep the particulate materials suspended at bottomhole temperatures is important. However, many polymers, especially random coil type polymers, undergo severe thermal thinning at elevated temperatures. Due to the shear thinning nature of the polymers, in general, the viscosity levels at downhole temperatures may reach such low values that the particulate solid settling becomes a severe problem. Increasing the amounts of the polymer concentrates requires pumping highly viscous fluids on the surface at room temperature. If a combination of unmodified polysaccharide and insolubilized organic carbonate-modified polysaccharide are pumped together, reasonable surface viscosities at room temperature while maintaining adequate viscosities at downhole temperatures (by activation of the organic carbonate modified polysaccharide at suitable depths and temperatures) can be achieved.

The hydration of xanthan can be delayed by reaction with organic carbonates. For example, work with xanthan modified by reactions with glyceryl carbonate (abbreviated "GC" in the figures) and ethylene carbonate (abbreviated "EC" in the figures) revealed that hydration of xanthan remains severely limited or non-existent even at 250 °F (121°C). The results are shown in **Fig. 7****,** which show that the modified xanthan begins to hydrate after the temperature reaches 250 °F (121°C) whereas unmodified xanthan under the same conditions is fully hydrated before reaching that temperature. It should also be noted that viscosity after complete hydration at 250 °F (121°C) is higher for the chemically modified xanthan when compared to unmodified xanthan. In addition, the unmodified xanthan shear thins above 250 °F (121°C) under shear, whereas the modified xanthan continues viscosity build up at 250 °F (121°C), thus improving suspension ability of, for example, a drilling fluid for prolonged periods at elevated temperatures.

The increase in viscosity of organic carbonate modified materials relative to unmodified polysaccharides is also demonstrated by comparing the viscosities for 40 lb/Mgal (4.8 kg/m³) xanthan solutions containing solid unmodified and modified xanthan (equivalent to 80 lb/1,000 gal (9.6 kg/m³) added to the gel solution, heated to 250 °F (121°C) until hydration is complete as described earlier **(****Fig. 7****),** cooling the gel solution to room temperature, and reheating the solution as part of the same experiments. These results shown in **Fig. 8** demonstrate that the viscosities of organic carbonate modified polysaccharides are significantly higher (close to 50% increase - compare room temperature values in **Fig. 8**), which is believed to be due to increased molecular weights.

### Example: Modified Diutan

Hydration behavior similar to xanthan is observed with diutan polymer. Like xanthan, diutan has a helical structure. The ratio of solid polymer to organic carbonate is in the range of 1.0 : 0.08 to 1.0 : 0.2 for these polymers and the heating time is 20 hours. It should be noted that the treatment with ethylene carbonate yielded materials that hydrated slowly at room temperature, and required elevated temperatures (for example, 80 °C) for complete hydration. The rheologies were measured on Haake instrument, as well as with Brookfield PVS viscometer.

**Table 5 - Diutan with Organic Carbonate Treatment in DI Water (40 lb/MGal (4.8 kg/m³) gel)**

| | Hydration time | Viscosity @ 1.5 rpm, cP | Viscosity @ 6 rpm, cP | Viscosity @ 30 rpm, cP |
|---|---|---|---|---|
| | | | | |
| Clarified Diutan - Control | 170 min | 8800 | 5200 | 640 |
| Clarified Diutan-glyceryl carbonate treated | 170 min | 11600 | 6800 | 860 |
| | | | | |
| Regular Grade Diutan - control | 25 min | 8000 | 2400 | 560 |
| Regular Grade Diutan - glyceryl carbonate treated | 30 min | 10800 | 4000 | 840 |

For fracturing applications using linear xanthan polymers, as well as for suspension applications using diutan, the present invention offers advantages, in terms of reduced cost, reduced polymer usage, and potentially improved rheologies.

**Table 6 - Effects on Viscosity of Salt Addition to Prehydrated Diutan Solutions in DI Water**

| | Viscosity @ 1.5 rpm, Cp | Viscosity @ 6 rpm, Cp | Viscosity @ 30 rpm, Cp | % increase in viscosity due to salt addition |
|---|---|---|---|---|
| Regular Grade Diutan Control - No salt | 8000 | 2600 | 570 | |
| Regular Grade Diutan Control - with 2% KCl | 24000 | 8500 | 2120 | 372% |
| | | | | |
| Regular Grade Diutan GC Treated - No salt | 9600 | 2900 | 680 | |
| Regular Grade Diutan GC Treated - with 2% KCl | 16000 | 5700 | 1480 | 218% |
| | | | | |
| Clarified Grade Diutan Control - No salt | 14400 | 3800 | 820 | |
| Clarified Grade Diutan Control - with 2% KCl | 20800 | 7200 | 1840 | 224% |
| | | | | |
| Clarified Grade Diutan GC Treated - No salt | 13600 | 4100 | 1000 | |
| Clarified Grade Diutan -GC Treated - with 2% KCI | 14800 | 5200 | 1340 | 134% |

The brine sensitivity of diutan is known and constitutes a limitation on the use of the product in the field. Organic carbonate treatment of diutan lowers the viscosity increase of diutan solutions when mixed with brine solutions such as completion brines.

The following hydration experiments were conducted by starting with a 40 lb per Mgal (4.8 kg/m³) polysaccharide gel with 2% KCl made up with deionized water, followed by addition of solid chemically modified polysaccharide (equivalent to 40-80 lb per 1,000 gal (4.8 kg/m³ - 9.6 kg/m³ )) to the gel and measuring viscosity @ 40 sec-1 vs. time at a given temperature using Chandler Model 5550 viscometer. For comparison, similar experiments were conducted by addition of solid unmodified polysaccharide.

Hydration of diutan (commercially available from Halliburton Energy Services under the trade name "FDP s848"), which is a very effective high-temperature suspending agent (i.e., does not undergo thermal thinning at elevated temperature), is not affected by modification with organic carbonates (**Fig. 9**), but the viscosity increase due to the modification is dramatic. This is shown, by fully hydrating and cooling the solution to room and comparing the viscosities of room temperature control solution vs. modified diutan solution (**Fig. 10**). **Fig. 10** shows that the room temperature viscosity increases by about 2,200% due to modification.

### Example: Modified Scleroglucan

The following hydration experiments were conducted by starting with a 40 lb per Mgal (4.8 kg/m³) unmodified polysaccharide gel with 2% KCl made up with deionized water followed by addition of solid chemically modified polysaccharide (equivalent to 40-80 lb per 1,000 gal (4.8 kg/m³ - 9.6 kg/m³ )) to the gel. The viscosity was measured at 40 sec-1 vs. time at a given temperature using Chandler Model 5550 viscometer. For comparison, similar experiments were conducted by addition of solid unmodified polysaccharide.

The hydration of scleroglucan (commercially available from Halliburton Energy Services under the trade name "FDP 805") can be delayed by modifying with organic carbonate. For example, hydration of scleroglucan chemically modified with ethylene carbonate (abbreviated "EC" in the figures) was completely inhibited even after a long time at 250 °F (121°C). A 40 lb/Mgal (4.8 kg/m³) solution of scleroglucan was prepared by hydration, and to this polymer solution 80 lb/Mgal (9.6 kg/m³) solid modified scleroglucan was added. The resulting mixture was hydrated by heating to 250 °F (121°C). The results are shown in **Fig. 11****.** The viscosity of the fluid is identical to that of a starting 40 lb/Mgal (4.8 kg/m³) unmodified polysaccharide gel solution (**Fig. 11**). Incredibly, contribution to viscosity from hydration of modified scleroglucan was not seen even at 300 °F (149 °C) (**Fig. 12**).

However, when the pH of similar heterogeneous mixture containing unmodified scleroglucan and scleroglucan modified with glycerine carbonate ("GC") was raised to 10.7, the hydration of the modified scleroglucan started around 200 °F (93°C), and was almost complete after several minutes at 250 °F (121°C) (**Fig. 13**).

A similar hydration study at 300 °F in one case at unadjusted pH and another at pH of 10.7 suggests that rapid hydration takes place up to 300 °F (149 °C), at which temperature the polymer undergoes either degradation or radical changes to structure (a property inherent to scleroglucan) at about 300 °F (149 °C) (**Fig. 14**).

### Example: Modified Guar and Hydroxypropyl Guar ("HPG")

Guar polymer was treated with organic carbonates and viscosities were measured in DI water. The results are provided in **Table 7.**

**Table 7 - Solid state treatment at 80 °C of guar with organic carbonates (Treatment Duration, 20 hours at 80 °C; Treatment ratio, 1.0 : 0.11 by wt; polymer concentration, 40 lb per 1M gallons (4.8 kg/m³) DI water)**

| | Guar: Carbonate Wt ratio | Viscosity @ 1.5 rpm, Cp | Viscosity @ 6 rpm, Cp | Viscosity @ 30 rpm, Cp | Time of hydration |
|---|---|---|---|---|---|
| None | 1.0 : 0.0 | 800 | 700 | 480 | 135 min |
| Ethylene Carbonate | 1.0 : 0.112 | 0 | 0 | 0 | 23 hours |
| Propylene | 1.0 : 0.10 | 400 | 175 | 130 | 156 min |
| Carbonate | | 500 | 475 | 380 | 48 hours at room temperature |
| Glyceryl Carbonate | 1.0 : 0.123 | 0 | 0 | 0 | 180 min (settling) |
| Glyceryl Carbonate | 1.0 : 0.114 | 0 | 0 | 0 | Solid settled and swollen at 80 °C |
| Glyceryl Carbonate | 1.0 : 0.088 | 0 | 0 | 0 | Solid settled and swollen at 80 °C |
| Butylene | 1.0 : 0.10 | 400 | 550 | 430 | 129 min |
| Carbonate | | 900 | 675 | 490 | 23 hours |

While no viscosity increases were observed from organic carbonate treatment, the polymer dissolution was significantly inhibited in all cases. It appears that non-helical polymers behave differently than helical polysaccharides when treated in solid state with organic carbonates.

Hydroxypropyl guar ("HPG") was also tested after treating with organic carbonates for 80 °C for 20 hours. Again, the results indicate that the hydration rates are slowed down, and there was no increase viscosity when measured at room temperature. Results are shown in **Table 8.**

**Table 8 - Solid state treatment at 80 °C of HPG with organic carbonates (Treatment Duration, 20 hours at 80 °C; Treatment ratio, 1.0 : 0.10 by wt; polymer concentration, 40 lb per 1M gallons (4.8 kg/m³) DI water)**

| | Viscosity (cp) @1.5 rpm | Viscosity (cp) @6 rpm | Viscosity (cp) @30 rpm | Hydration time |
|---|---|---|---|---|
| HPG Control | 700 | 600 | 435 | 130 min |
| HPG treated with glyceryl carbonate | approx. 100 | 175 | 135 | 660 min |
| HPG treated with ethylene carbonate | 300 | 400 | 275 | 360 min |

The following hydration experiments were conducted by starting with a 40 lb per Mgal (4.8 kg/m³) polysaccharide gel with 2% KCl made up with deionized water, followed by addition of solid chemically modified polysaccharide (equivalent to 40-80 lb per 1,000 gal (4.8 kg/m³ - 9.6 kg/m³)) to the gel and measuring viscosity (@ 40 sec-1) vs. time at a given temperature using Chandler Model 5550 viscometer. For comparison, similar experiments were conducted by addition of solid unmodified polysaccharide.

Studies with guar show that hydration of glyceryl carbonate or ethylene carbonate modified guar is delayed in temperature range of about 20 °F (about -6.7 °C) to about 250 °F (about 121°C). However, when the pH of the fluid is increased to 9.9, hydration starts essentially at about room temperature and is complete by the time 180 °F (82°C) is reached **(****Fig. 15****).**

### Example: Modified Hydroxyethyl Cellulose ("HEC")

Hydroxyethylcellulose (commercially available from Halliburton Energy Services under the trade names "WG-17" or "FWCA") when reacted with ethylene carbonate provides a modified hydroxyethylcellulose. Analysis of the product, starting FWCA, and ethylene carbonate by thermal gravimetric analysis ("TGA") indicated that the reaction was complete, and neither unreacted FWCA nor ethylene carbonate was detectable in the product sample.

The modified hydroxyethylcellulose does not hydrate in fresh water (H₂O) even at 300 °F (149°C), whereas unmodified solid hydroxyethylcellulose ("HEC") hydrates in fresh water (having about neutral pH) at about 100 °F (about 38°C). By addition of basic salts, for example, NaOH, K₂CO₃, MgO, hydrated lime, the hydration temperature of the modified hydroxyethylcellulose can be varied. Acidic materials such as acetic acid do not allow hydration even up to 300 °F (149°C). The results are shown in **Figs. 16a** and **16b****,** wherein "Modified HEC in water" refers to the hydration results for a sample of modified hydroxyethylcellulose in water; where "HEC Control" refers to the hydration results for a sample of unmodified hydroxyethylcellulose in water, wherein "NaoH," "Hydr. Lime," "K₂CO₃", "MgO" or "Acetic Acid" refer to the hydration results for samples of modified HEC in water with the addition of each of those, respectively. Hydration, if any, is indicated by an increase in viscosity. In addition, the temperature profile is shown for each of the hydration tests on the samples.

### Example: Modified Starch Derivative

In drilling fluids, a cross-linked starch derivative such as "FILTER-CHEK" (commercially available from Halliburton Energy Services) is commonly used as a porosity plugging filtration control agent. However, it begins to hydrate at room temperature. The viscosification behavior in water as shown in **Fig. 17****,** suggests that the additive may be unable to retain its particulate nature due to hydration. However, carbonate modification of the material completely inhibits hydration until high temperatures are reached suggesting that modified FILTER-CHEK can show improved performance.

### Well Treatment Steps

The method can further include the step of transporting the modified polysaccharide from a remote location to a well site of a well penetrating a subterranean formation as a liquid gel concentrate ("LGC") in a non-aqueous carrier fluid.

The step of mixing the modified polysaccharide with at least water to form a treatment fluid can include dosing the water with a liquid gel concentrate ("LGC") of the modified polysaccharide. This is a preferred manner of controlling the mixing proportions in the forming of a treatment fluid.

The step of mixing the modified polysaccharide with at least water preferably forms a treatment fluid having a concentration of the modified polysaccharide in the range of from about 0.02% to about 15% by weight of the water of the treatment fluid.

The aqueous treatment fluid can be for use in a water fracturing treatment, wherein the water-soluble modified polysaccharide is cross-linked to substantially increase the viscosity of an aqueous treatment fluid. In such a case, the step of mixing the modified polysaccharide with at least water, and activating the polymer by adjustment of pH by addition of suitable materials to either partially or fully dissolve and viscosify the solution, is adapted to form a treatment fluid having a concentration of the modified polysaccharide and a crosslinker such that the treatment fluid is capable of forming a cross-linked gel.

The aqueous treatment fluid can be for use in a high-rate water fracturing treatment, wherein the modified polysaccharide is for use as a friction reducer. In such a case, the step of mixing the modified polysaccharide with at least water is adapted to form a treatment fluid having a concentration of the modified polysaccharide that is sufficient to reduce the friction of the fluid. For this application, preferably, the step of mixing is adapted to form a treatment fluid having a concentration of the modified polysaccharide that is insufficient to form a gel.

In certain well treatments, the step of mixing the modified polysaccharide with at least water is adapted to form a treatment fluid comprising a salt, to be used, for example, as a weighting agent for the treatment fluid.

The step of mixing the modified polysaccharide with at least water can be further adapted to form a treatment fluid further comprising at least one additive selected from the group consisting of: a surfactant, an anti-scaling agent, a crosslinker, a corrosion inhibitor, and a breaker.

According to a preferred well treatment method according to the invention, the aqueous treatment fluid is introduced into the subterranean formation at or above a pressure sufficient to create at least one fracture in the formation.

### Example: Formation and Use of Aqueous Suspension of Modified Polysaccharide

Use of conventional liquid gel concentrates ("LGC"), which are oil-based, has come under increasing scrutiny by governmental and public agencies as potential environmental threat.

The transesterification-agent modified, insolubilized water-soluble polysaccharide may be used as storable, aqueous suspension. The chemical modification of the polysaccharide can be temporary and can be triggered in an alkaline solution to release the original polymer. Thus, a water-based suspension of a modified polysaccharide can be formed, which can be activated to hydrate just prior to use in a treatment fluid.

Preferably, the polymer in the water-based fluid is suspended in a concentration of at least 80 lb per 1,000 gallons water (9.6 kg/m³). More preferably, the polymer is in a sufficient concentration to be used as a concentrated water-based suspension of a polysaccharide in a step of forming a treatment fluid.

This can improve the environmental rating relative to conventional Liquid Gel Concentrates by using a water-based suspension of a modified polysaccharide according to this invention without sacrificing the convenience of using a polysaccharide in a liquid form. The method used is not based on expensive encapsulation techniques, but a simple chemical reaction that is done in solid state, contrary to permanent chemical modifications such as hydroxyethylation and carboxymethylation, which are done in water and use toxic materials such as ethylene oxide and propylene oxide and require costly procedures to isolate the final solid.

As described herein, modifying polysaccharides in solid state, in a simple method, by reactions with organic carbonates results in insolubilized materials that hydrate quickly when exposed alkaline water (for example, to sodium hydroxide solutions).

For example, it has been discovered that "WG-35"™ (a guar commercially available from Halliburton Energy Services, Inc. in Duncan, Oklahoma) upon modification with organic carbonate (ethylene carbonate), can be suspended in water (at a concentration of 80 lbs per 1,000 gallons (9.6 kg/m³)), and stored for at least one week (7 days) without increasing the viscosity any higher than 1 centipoise. Upon addition, at room temperature, of "MO-67" (a sodium hydroxide solution) to the 7-day stored WG-35™ suspension, viscosification started immediately. This addition step was performed similar to hydration of a conventional, oil-based LGC concentrate in a Waring Blender. After 30 minute hydration time at room temperature (monitored by Chandler rheometer), "BC-140" (a borate cross-linker), was added, and the viscosity build-up was monitored at 40 sec-1 at room temperature (to simulate vortex test for crosslinking in the blender). The same fluid was heated to 160 °F (71 °C) and further cross-linking was measured. The experiments described here were measured with the same sample of carbonate-modified WG-35™. The results are presented in Figure 18. The results clearly show that hydration rates are essentially similar to "LGC 36UC" (a conventional, oil-based LGC) even though significantly higher viscosities are obtained with LGC 36UC (1 gal LGC36UC per 100 gal water is calculated to be about 45 lbs/Mgal (5.4 kg/m³) polymer gel) with continued hydration over longer time. This may be due to differences in WG-35™ used in the preparation of the aqueous suspension of the modified polysaccharide and WG-36^{™} (a non-derivatized linear guar available from Halliburton Energy Services, Inc., Duncan, Oklahoma) used in preparation of the conventional, oil-based LGC).

**Figure 19** compares cross-linked gel viscosity by BC-140 (a borate cross-linker) at 160 °F (71 °C) and at room temperature, and relates these viscosities to hydrated, uncrosslinked polymer gel. The results are consistent with what is expected for a normally hydrated WG-35 polymer.

The ratio of WG-35 to organic carbonate and the duration of heating during preparation of the modified guar appear to influence the shelf life (duration over which the polymer remains unhydrated) of the aqueous suspension.

Simple addition of the modified polymer to water allowed for settling of the polymer, which is easily re-suspended by agitation. In order to develop a non-settling suspension, water containing 2% bentonite as a suspending agent was used, and a polymer concentration of 160 lbs per 1,000 gallons (19 kg/m³) was used. The resulting fluid was viscous and pumpable, and it did not hydrate in tap water. Even though the concentration of polymer in this bentonite suspension is much less than that in LGC 36UC suspension (4.5 lbs vs. 0.16 lbs per gallon (540 kg/m³ vs. 19 kg/m³ )), further optimization of suspension stability towards settling can be undertaken by varying the concentration of the suspending agent, or the type of suspending agents. Additional examples of suitable suspending aids include inorganic suspending aids such as laponite, and attapulgite, or polymeric suspending aids suspending aids such as synthetic polymers (for example, polyacrylamides or AMPS copolymers and the like), or biopolymers (for example, diutan, guar, xanthan and scleroglucan hydroxyethyl cellulose and the like). Also suitable as suspending agents are hydrophobically modified water-soluble polymers that provide for fluid viscosification due to hydrophobic associative thickening. Examples of such polymers include methylcellulose, hydroxypropyl methylcellulose, hydrophobically modified polyacrylic acid, polyacrylamide or guar and the like. Amounts of suspending agent required to provide for stable suspension during storage can be determined for a given suspending agent by simple experimentation.

As shown in Figure 11, lowering of pH by the addition of acidic or acid generating substances provides additional protection against premature hydration of suspended polymer. Examples of suitable acidic or acid generating materials include acetic acid, hydrogenphosphate salts, polylactic, and polyglycolic acids.

Addition of algicides or biocides to prevent bacterial or fungal growth to extend the shelf life of the polymer suspensions is also contemplated.

Based on these measures, the improvements are expected to yield useful results. Alternatively, the lower polymer concentration suspensions can be prepared on site several days ahead and diluted with alkaline water just prior to use.

The carbonate modification is not a permanent chemical modification in the same sense as hydroxyethylation, hydroxypropylation, or carboxymethylation. It is believed that hydrolysis of the carbonate links with alkali essentially regenerates the original polymer.

This is a new and promising approach to water-based, environmentally preferred alternatives to LGC of fracture polymers.

Preferably, the step of forming the first fluid is performed at the well site. The purpose is to avoid any need for trucking a dilute suspension or a base gel to the well site.

Preferably, 90% of the modified polysaccharide has a particle size in the range of 5 micrometers to 200 micrometers.

Preferably, the continuous water phase of the concentrated water-based suspension has a pH in the range of 2 to 8.

Preferably, the modified polysaccharide is at a concentration of at least 30% by weight of the water in the continuous water phase of the concentrated water-based suspension of a modified polysaccharide. More preferably, the concentration of the modified polysaccharide is less than 10% by weight of all the water in the first fluid. Most preferably, the concentration of the modified polysaccharide is less than 5% by weight of all the water in the first fluid.

The method preferably further includes the step of mixing the first fluid with a second fluid to form the treatment fluid. For example, the first fluid can be a base gel, and the second fluid can include a crosslinking agent.

The method preferably further includes the step of including in the first fluid or subsequently mixing with the first fluid a material that will reduce the pH of the water in the treatment fluid to less than 8.0 after a sufficient time under the conditions for the modified polysaccharide to be converted back to the water-soluble polysaccharide and be fully hydrated.

It should be understood that the first fluid can be used directly as a treatment fluid.

According the method, the treatment fluid may be introduced into the subterranean formation at or above a pressure sufficient to create at least one fracture in the formation. Alternatively, the treatment fluid can be, for example, a drilling fluid, a spacer fluid, a gravel packing fluid, or a completion fluid. The method can further include the step of flowing back fluid from the well.

### Conclusions

The results presented show that suspension ability and particulate-assisted fluid loss control ability of drilling at all temperatures, and particularly at elevated temperatures where thermal thinning is a serious problem, can be improved substantially by using organic carbonate modified polysaccharides modified with a transesterification agent.

Distinctive features include one or more of the following:
- Less polymer load without sacrificing viscosity and rheology benefits in fracturing and gravel packing applications.
- Delayed hydration when needed.
- Ability to control hydration, viscosification point of fluids containing polysaccharides
- Modification of polysaccharides is a simple process (solid state reaction),
- The resulting products provide flexibility of activation either thermally or with bases of different strengths at any desired temperature
- Maintain particle suspension ability and fluid loss control of drilling fluids and spacer fluids at elevated temperatures

Advantages of the inventions include one or more of the following:
- Fracturing with linear gels and cross-linked gels
- Ability to compensate thermal thinning or polymer degradation and loss of suspension ability during pumping
- Lower pump pressures on the surface
- Gravel packing application and fracturing
- Blocking perforations in single-trip, multizone stimulations
- Lower polymer loading (easy clean up of fracturing and gravel-packing fluids and increased conductivity) due to increased viscosity from increased molecular weights
- The performance of existing products based on polysaccharides and their derivatives can be improved substantially with this simple chemical modification by organic carbonate.

Therefore, the present invention is well adapted to attain the ends and advantages mentioned as well as those that are inherent therein. The particular embodiments disclosed above are illustrative only, as the present invention may be modified and practiced in different but equivalent manners apparent to those skilled in the art having the benefit of the teachings herein. Furthermore, no limitations are intended to the details of construction or design herein shown, other than as described in the claims below. It is, therefore, evident that the particular illustrative embodiments disclosed above may be altered or modified and all such variations are considered within the scope of the present invention. While compositions and methods are described in terms of "comprising," "containing," or "including" various components or steps, the compositions and methods also can "consist essentially of" or "consist of" the various components and steps. Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a to b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an", as used in the claims, are defined herein to mean one or more than one of the element that it introduces. If there is any conflict in the usages of a word or term in this specification and one or more patent(s) or other documents that may be incorporated herein by reference, the definitions that are consistent with this specification should be adopted.

## Claims

1. A method of treating a well, wherein the method comprises the steps of:
(a) forming a first fluid comprising water and a modified polysaccharide, wherein the modified polysaccharide is prepared by the process of chemically combining:
(i) a water-soluble polysaccharide, wherein the polysaccharide is in a solid form during the combining step; and
(ii) a transesterification agent, wherein the transesterification agent is in liquid form during the combining step;
wherein the step of chemically combining is under substantially dry conditions; and
(b) introducing a treatment fluid comprising the first fluid into the well.

2. A method according to claim 1, wherein the treatment fluid is the first fluid.

3. A method according to claim 1 or claim 2, wherein the water-soluble polysaccharide is selected from the group consisting of xanthan, diutan, scleroglucan, and any combination thereof, or the group consisting of guar, a guar derivative, cellulose, a cellulose derivative, starch, a starch derivative, and any combination thereof.

4. A method according to any one of the preceding claims, wherein the transesterification agent is selected from the group consisting of cyclic carbamates, organic esters, carboxylic acid anhydrides, and lactones, and any combination thereof.

5. A method according to any one of claims 1 to 3, wherein the transesterification agent is an organic carbonate, preferably the organic carbonate is selected from the group consisting of ethylene carbonate, propylene carbonate, glycerine carbonate, butylene carbonate, diethyl carbonate, and any combination thereof.

6. A method according to any one of the preceding claims, wherein during the step of combining, includes heating within a temperature range from 40 °C to 160 °C.

7. A method according to any one of the preceding claims, wherein the step of combining is in the presence of less than 5% by weight water relative to the water-soluble polysaccharide.

8. A method according to any one of the preceding claims, wherein the modified polysaccharide has a slower hydration rate or increased hydration temperature relative to the water-soluble polysaccharide under pH of less than 8, but the hydration rate can be increased or the hydration temperature can be decreased by adjusting the pH to be greater than 8.5.

9. A method according to any one of the preceding claims, further comprising the step of: before, during, or after the step of introducing, adjusting the pH of the treatment fluid to be greater than 8.5.

10. A method according to claim 1, wherein the first fluid is formed by mixing at least:
(1) a concentrated water-based suspension of the modified polysaccharide,
wherein the modified polysaccharide is at a concentration of at least 20% by weight of the water in the continuous water phase,
wherein the continuous water phase of the suspension has a pH less than or equal to 8;
(2) water other than from the continuous water phase of the concentrated water-based suspension, wherein the concentration of the modified polysaccharide is less than 15% by weight of all the water in the first fluid; and
(3) a material that will confer a pH of 8.5 or greater to all the water in the first fluid.

11. A method according to claim 10, wherein 90% of the modified polysaccharide has a particle size in the range of 5 micrometers to 200 micrometers.

12. A method according to claim 10 or claim 11, wherein the continuous water phase of the suspension has a pH in the range of 2 to 8.

13. A method according to any one of claims 10 to 12, wherein the modified polysaccharide is at a concentration of at least 30% by weight of the water in the continuous water phase of the concentrated water-based suspension of a modified polysaccharide.

14. A method according to any one of claims 10 to 13, wherein the suspension is stabilized against settling by the use of a suspending aid.

15. A method according to claim 14, wherein the concentration of the modified polysaccharide is less than 10% by weight of all the water in the first fluid, preferably the concentration of the modified polysaccharide is less than 5% by weight of all the water in the first fluid.

16. A method according to claim 1 or claim 10, further comprising the step of mixing the first fluid with a second fluid to form the treatment fluid.

17. A method according to claim 16, wherein the first fluid is a base gel.

18. A method according to claim 16 or 17, wherein the second fluid comprises a crosslinking agent.

19. A method according to any one of claims 10 to 18, further comprising the step of including in the first fluid or subsequently mixing with the first fluid a material that will reduce the pH of the water in the treatment fluid to less than 8.0 after a sufficient time under conditions for the modified polysaccharide to be converted back to the water-soluble polysaccharide and be fully hydrated.

20. A method according to any one of claims 10 to 19, wherein the treatment fluid is the first fluid.

21. A method according to any one of the preceding claims, wherein the treatment fluid is introduced into the subterranean formation at or above a pressure sufficient to create at least one fracture in the formation.

22. A method according to any one of the preceding claims, further comprising the step of flowing back fluid from the well.
